# EUROPEAN PATENT SPECIFICATION

(11) **EP 3 205 200 B1**
(45) Date of publication and mention of the grant of the patent: **20.07.2022**
(21) Application number: 17155718.4
(22) Date of filing: 10.02.2017
(51) Int. Cl.: A01D 34/416

(54) **TRIMMER HEAD HAVING LINE CARTRIDGE**
TRIMMERKOPF MIT EINER SCHNURKARTUSCHE
TÊTE FAUCHEUSE AVEC CASSETTE DE FIL

(30) Priority: 11.02.2016 US 201662293855 P
(43) Date of publication of application: 16.08.2017
(73) Proprietor: Techtronic Outdoor Products Technology Limited, Hamilton HM12 (BM)
(72) Inventor: HOFFMAN, Ronald J., Iva, SC 29655 (US)
(74) Representative: Novagraaf Group

(56) References cited:
- EP-A2- 0 824 854
- US-A- 4 138 810
- US-A- 4 285 128
- US-A1- 2001 023 542
- US-B1- 6 519 857

## Description

### FIELD

The present invention relates to trimmers and, more particularly, to trimmer heads for string trimmers.

According to its abstract, US-B-6519857 describes a cutting head for rotary trimmers in which two relatively short fixed lengths of flexible cutting line are inserted into opposed channels in the head and are secured in place by a pair of spring biased toothed cams. Each of the cams is pivotally mounted on a post within the housing adjacent one of the channels and defines a curvilinear camming surface having a plurality of uniformly spaced teeth thereon that project into the channels at increasing angles of inclination from the outermost tooth to the innermost tooth for engaging the line. A pair of torsion springs bias the cams to pivot on their mounting teeth such that the backsides of the teeth are continually urged toward the openings to the channels thereby allowing line to be inserted inwardly into the head past the toothed cams but retained by the cams against any outwardly directed forces acting on the line. The cams are symmetrically balanced about their axes of rotation so as to be unaffected by centrifugal force acting thereon during use.

According to its abstract, US-A-2001/023542 describes a string trimmer head is provided for receiving and retaining separate lengths of string supplied from outside the head. String lengths passing through openings in the periphery of the head are held by clamping members provided within the head. The clamping members are selectively opened by activation of respective slidable members provided on the upper surface of the head in order to release short lengths of previously supplied string and/or to permit the receipt of new string lengths. On release of the slidable members, the respective clamping members move towards one another for clamping purposes under the influence of springs.

According to its abstract, EP-A-0824854 describes a cutting head for a string trimmer is provided which accommodates any string gauge thickness and may be easily and quickly re-threaded upon failure of a string previously disposed therein. Clamping members are provided to clamp the strings within the cutter head, with the clamping force being provided by springs and centrifugally generated moments. The clamping members are capable of generating two degrees of clamping force. The lesser degree of clamping force can be overcome by a string forcibly inserted into the cutting head.

### SUMMARY

Generally, trimmers are used to cut grass and weeds, and are often used to edge around trees, near fences and walls, and along landscape borders. Conventional string trimmers include an elongated shaft with a rotating element or gear head near the end of the elongated shaft, and a spool or string head is attached to the gear head. Typically, the string head includes a monofilament line (i.e., trimmer line) that is rotated by the gear head for cutting and trimming along landscaped areas, fences, and walls.

In one independent aspect, a cartridge for a trimmer head according to claim 1 is provided. Further preferred embodiments are provided in the dependent claims.

### BRIEF DESCRIPTION OF THE DRAWINGS

Fig. 1 is a perspective view of a trimmer, such as a string trimmer, for use with a trimmer head having a line cartridge.
Fig. 2 is a top perspective exploded view of a trimmer head for use with the trimmer shown in Fig. 1, illustrating a line cartridge.
Fig. 3 is a perspective cross-sectional view of the trimmer head and the line cartridge shown in Fig. 2.
Fig. 4 is another perspective cross-sectional view of the trimmer head and the line cartridge shown in Fig. 2.
Fig. 5 is a bottom perspective view top member of the trimmer head shown in Fig. 2.
Fig. 6 is a bottom perspective view of the top cover of the trimmer head shown in Fig. 2 with a slide tube of the line cartridge.
Fig. 7 is top perspective view of the line cartridge shown in Fig. 2 with flyweights of the trimmer head.
Fig. 8 is a top perspective view of the line cartridge and flyweights shown in Fig. 7, illustrating the slide tube lifted by a flyweight.
Fig. 9 is another top perspective view of the line cartridge, flyweights and slide tube as shown in Fig. 8.
Fig. 10 is a top perspective view of the line cartridge shown in Fig. 2.
Fig. 11 is a bottom perspective view of the line cartridge shown in Fig. 2.
Fig. 12 is a side view of the line cartridge shown in Fig. 2.
Fig. 13 is an opposite side view of the line cartridge shown in Fig. 2.
Fig. 14 is a front view of the line cartridge shown in Fig. 2.
Fig. 15 is a rear view of the line cartridge shown in Fig. 2.
Fig. 16 is a top view of the line cartridge shown in Fig. 2.
Fig. 17 is a bottom view of the line cartridge shown in Fig. 2.
Fig. 18 is a top perspective exploded view of the line cartridge shown in Fig. 2.
Fig. 19 is a bottom perspective exploded view of the line cartridge shown in Fig. 2.
Fig. 20 is a top perspective view of the line cartridge shown in Fig. 2 with the cartridge housing assembly exploded.
Fig. 21 is a bottom perspective view of the line cartridge as shown in Fig. 20.
Fig. 22 is a top perspective view of the line cartridge shown in Fig. 2.
Fig. 23 is a bottom perspective view of the body of the line cartridge shown in Fig. 2.
Fig. 24 is a side view of the body of the line cartridge as shown in Fig. 23.
Fig. 25 is another side view of the body of the line cartridge as shown in Fig. 23.
Fig. 26 is a front view of the body of the line cartridge as shown in Fig. 23.
Fig. 27 is a rear view of the body of the line cartridge as shown in Fig. 23.
Fig. 28 is a top view of the body of the line cartridge as shown in Fig. 23.
Fig. 29 is a bottom view of the body of the line cartridge as shown in Fig. 23.
Fig. 30 is a top perspective view of the body of the line cartridge as shown in Fig. 23 with the slide tube exploded.
Fig. 31 is a top perspective view of an internal portion of the line cartridge as shown in Fig. 30.
Fig. 32 is a bottom perspective view of the internal portion of the line cartridge as shown in Fig. 31.
Fig. 33 is a top perspective view of the internal portion of the line cartridge as shown in Fig. 31 with a transparent line guide member.
Fig. 34 is a bottom perspective view of the internal portion of the line cartridge as shown in Fig. 33.
Fig. 35 is a side view of the internal portion of the line cartridge as shown in Fig. 31 with a line guide member removed.
Fig. 36 is a rear view of the internal portion of the line cartridge as shown in Fig. 35.
Fig. 37 is a bottom perspective view of the line guide members and the brake members of the line cartridge as shown in Fig. 31.
Fig. 38 is a top perspective view of the line guide members and the brake members of the line cartridge as shown in Fig. 37.
Fig. 39 is a top perspective view of the brake members and a trimmer line of the line cartridge as shown in Fig. 38.
Figs. 40-43 are cross-sectional views of the trimmer head and an alternative construction of a line cartridge.
Fig. 44 is a top perspective view of a portion of the line cartridge shown in Fig. 40.
Fig. 45 is a bottom perspective view of the portion of the line cartridge shown in Fig. 44.
Figs. 46-47 are end views of the portion of the line cartridge shown in Fig. 44.
Figs. 48-49 are side views of the portion of the line cartridge shown in Fig. 44.
Fig. 50 is a top view of the portion of the line cartridge shown in Fig. 44.
Fig. 51 is a bottom view of the portion of the line cartridge shown in Fig. 44 with the bump member removed.
Figs. 52-53 are exploded views of the portion of the line cartridge shown in Fig. 44.
Fig. 54 is a top view of gear assembly and its support, with the line guide member shown as being transparent.
Fig. 55 is a bottom view of gear assembly and its support, with the gear support member shown as being transparent.
Fig. 56 is a bottom perspective view of the line guide member and the gear assembly.
Fig. 57 is a perspective view of the gear assembly and the gear support member.
Figs. 58-59 are top perspective views of the line guide member.
Figs. 60-61 are bottom perspective views of the line guide member.
Fig. 62 is a side view of line guide member.
Figs. 63-64 are perspective views of the gear support member.
Fig. 65 is a perspective view of the gear assembly.
Fig. 66 is a top perspective view of the slide tube, the main gear and the bump member and illustrating the stop assembly.
Figs. 67-68 are side views of the slide tube, the main gear and the bump member and illustrating the stop assembly.
Fig. 69 is a side view of the slide tube and the main gear and illustrating the first stop.
Fig. 70 is a top perspective view of the gear assembly and the bump member and illustrating the second stop.
Figs. 71-74 are views of the slide tube and the bump member and illustrating the stop members.
Figs. 75-76 are perspective views of the main gear.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting and variations thereof as used herein is meant to encompass only the items listed thereafter and equivalents thereof.

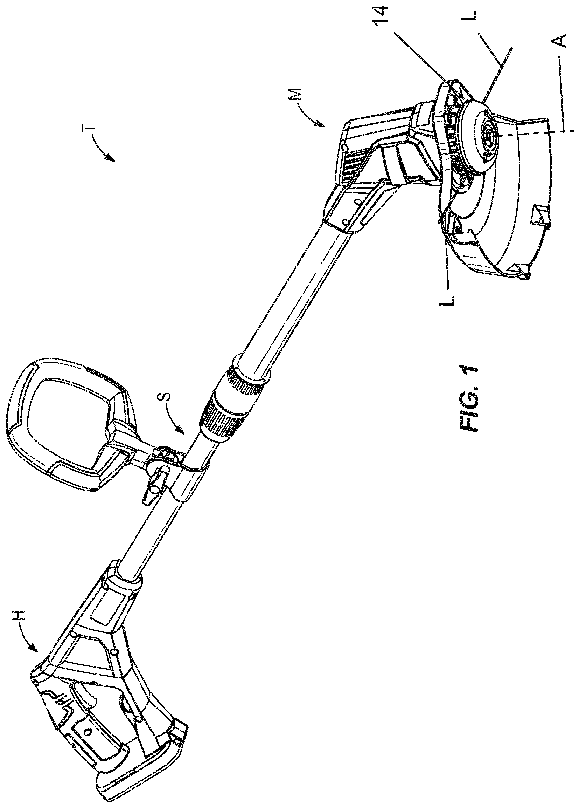

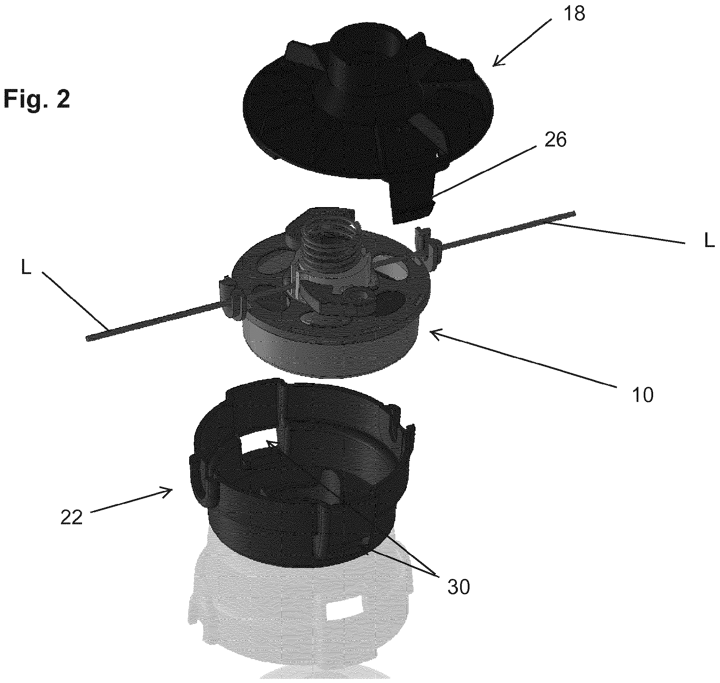

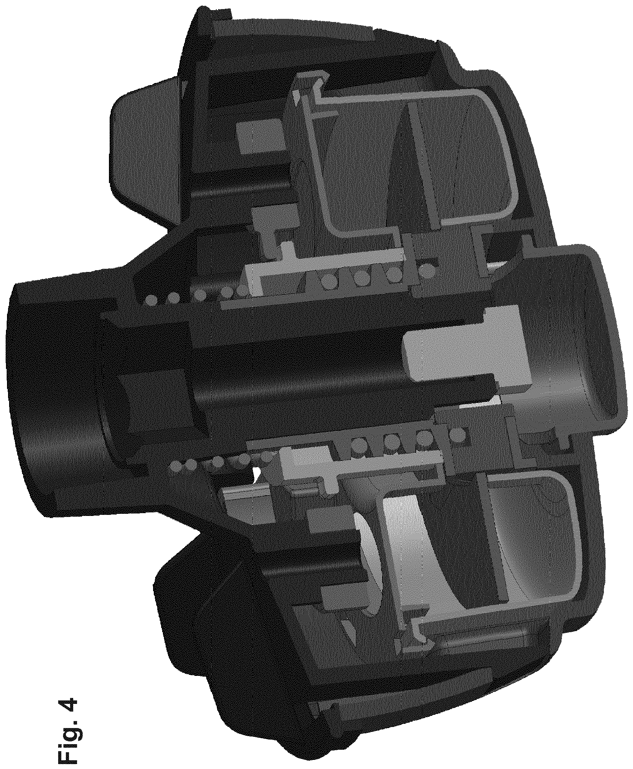

Figs. 2-4 illustrate a line cartridge 10 supportable in a trimmer head 14 for use on an exemplary string trimmer T shown in Fig. 1. The trimmer T generally includes a shaft S with a handle H toward one end and a motor housing M enclosing an electric motor (not shown) with a motor-driven output or drive shaft (not shown) for connection to a trimmer head on the other end. Various powered trimmers (e.g., battery-powered, gas-powered, etc.) may be used with the trimmer head 10.

The line cartridge 10 is assembled as a unit to be installed into the housing assembly of the trimmer head 14 and onto the trimmer T. The line cartridge 10 is assembled with one or more trimmer lines L and is operable to dispense the line(s) L until expended. Once the lines L are expended, the line cartridge 10 is removed and may be disposed. A replacement line cartridge 10 may then be installed to continue use of the trimmer T.

The trimmer head 14 is rotatable about an axis A and includes a housing assembly provided by a top member 18 and a bottom cover member 22. The housing members 18, 22 are connected by fingers 26 engageable in complementary openings 30. The housing members 18, 22 define a cavity 34 generally for receiving a spool (not shown) supporting trimmer line or the cartridge 10. Line openings 38 are defined in the side wall of the housing assembly, and a bump opening 42 is defined in the bottom cover member 22.

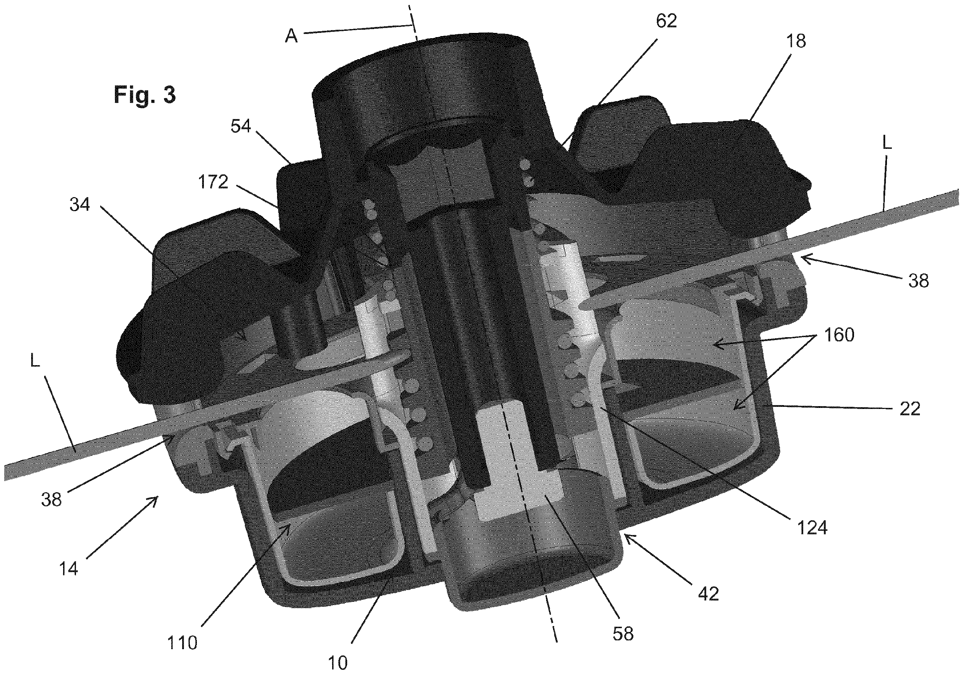

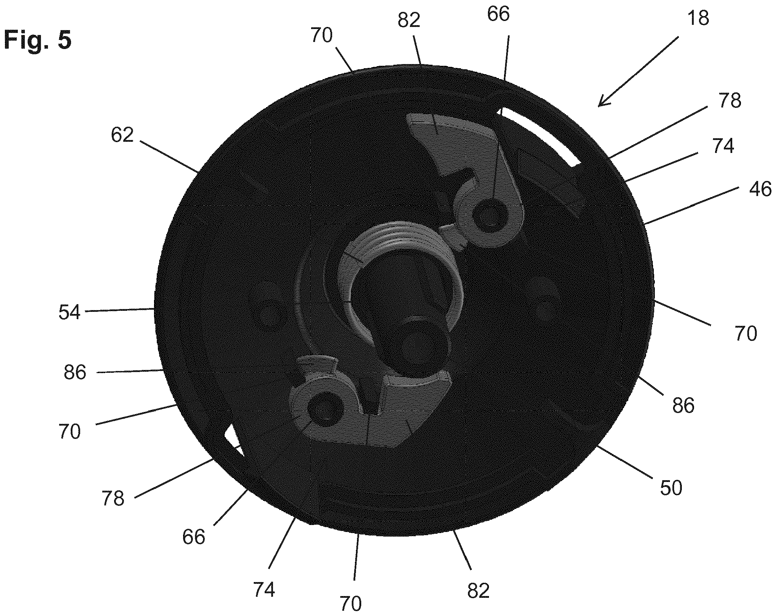

The top member 18 is drivingly connected to the drive shaft. The top member 18 includes (see Fig. 5) a plate 46 with a depending central post 50 having an annular rim 54. The central post 50 (see Fig. 3) receives a fastener 58 and supports a spring 62. As shown in Fig. 5, pivot posts 66 also depend from the plate 46 and are spaced radially from the central post 50. Stop members 70 are positioned around the posts 66.

The illustrated trimmer head 14 is an auto-feed trimmer head. As described below in more detail, the line cartridge 10 is operable to dispense line L in an auto-feed mode (when supported in the auto-feed trimmer head 14) or in a bump-feed mode (when supported in the auto-feed trimmer head 14 or when supported in a trimmer head without auto-feed).

In the illustrated auto-feed trimmer head 14, flyweights 74 are pivotably supported on the pivot posts 66. Each flyweight 74 includes a pivot portion 78 and a weighted arm 82 and a ramp 86 extending from the pivot portion 78.

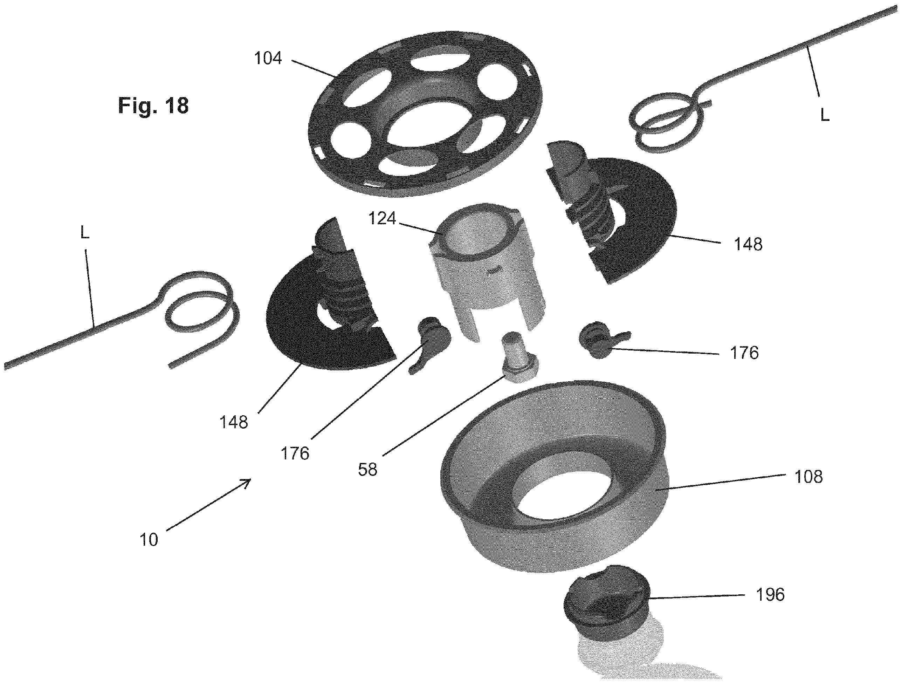

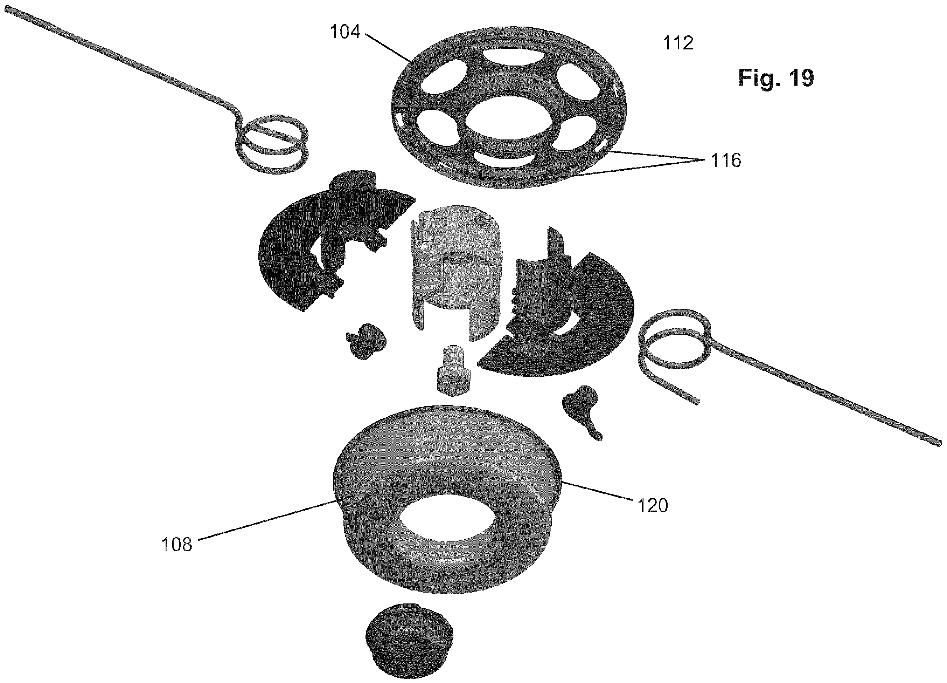

The line cartridge 10 includes (see Figs. 18-19) a cartridge housing assembly provided by a top plate 104 and a bottom cover 108 connected to define (see Fig. 3) a cavity 110. The top plate 104 defines (see Fig. 19) a central opening 112 and includes flexible fingers 116 engageable with a rim 120 on the bottom cover 108 to connect the components.

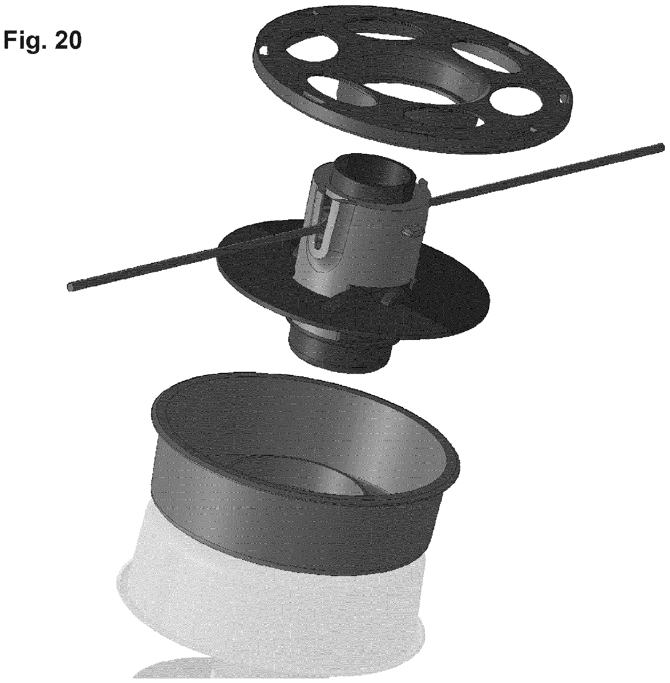

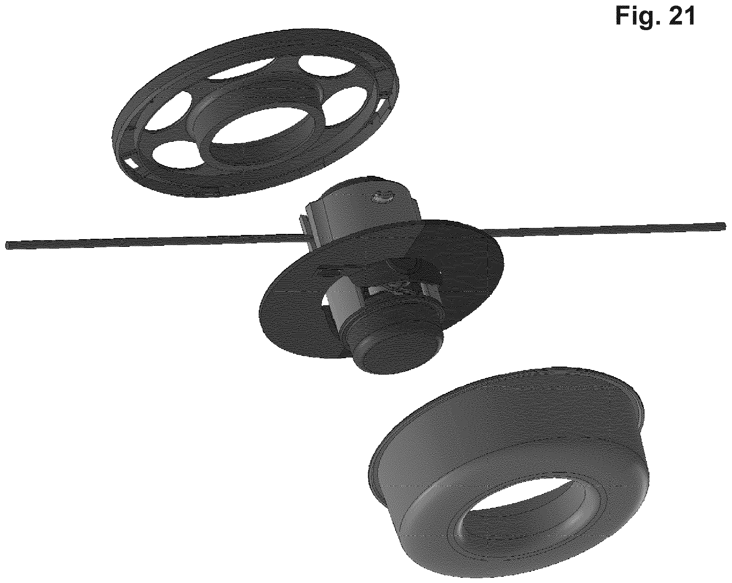

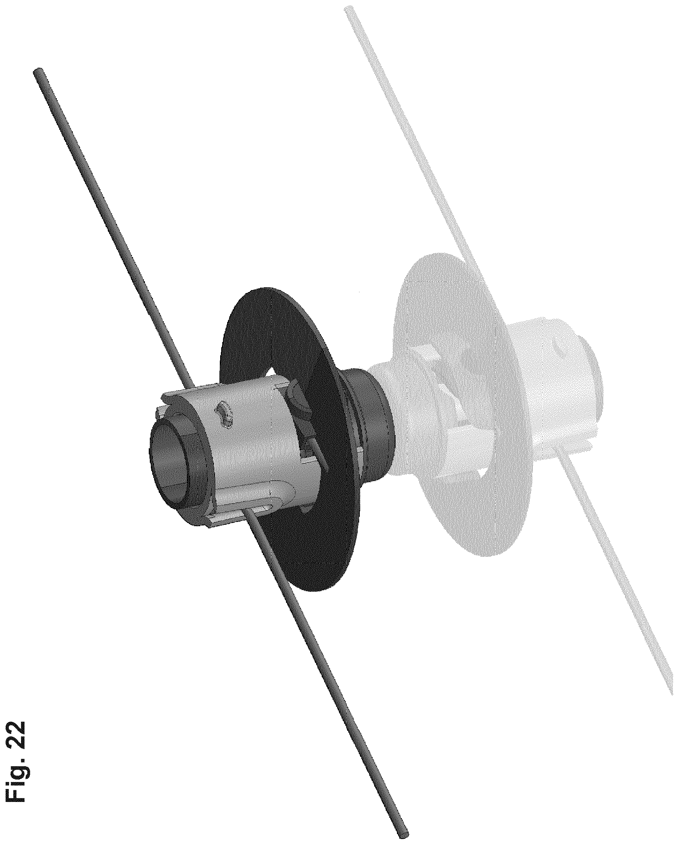

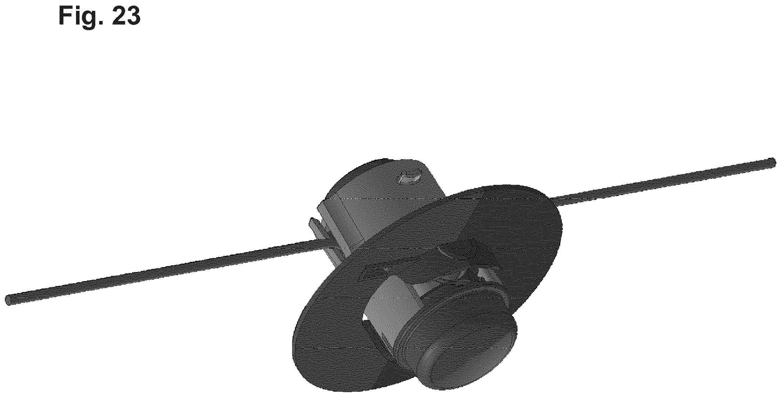

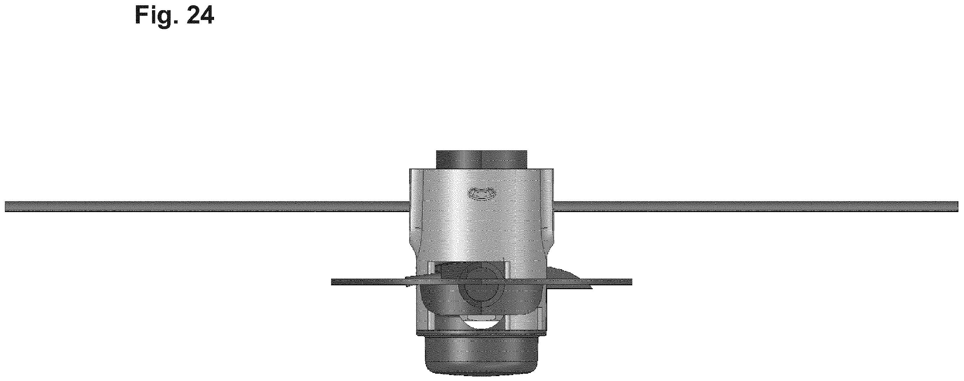

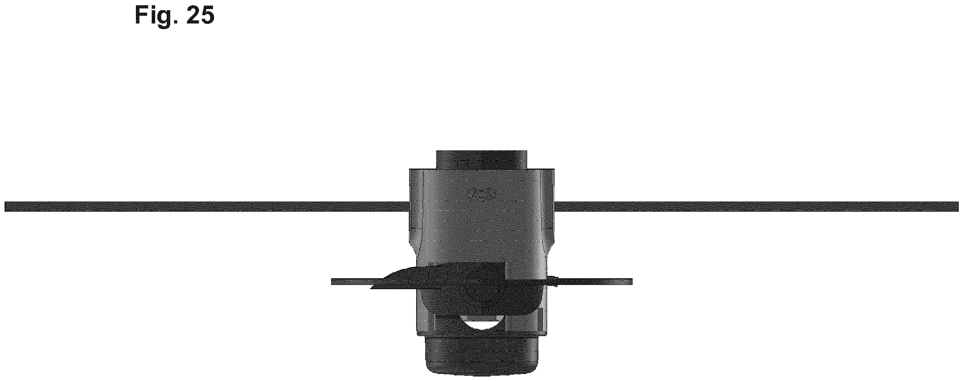

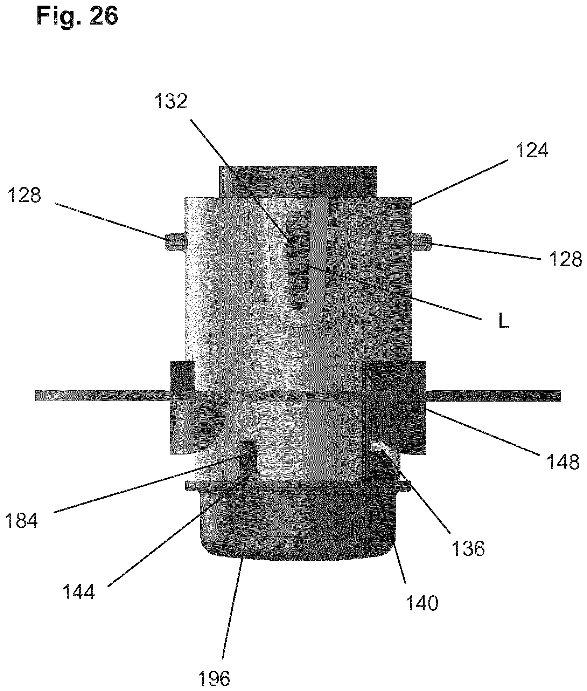

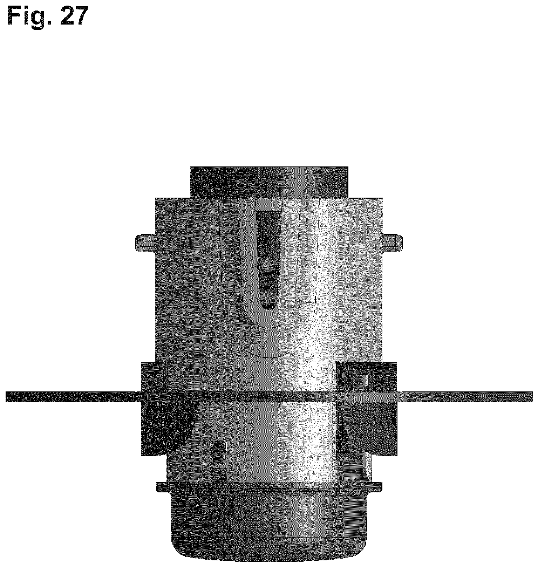

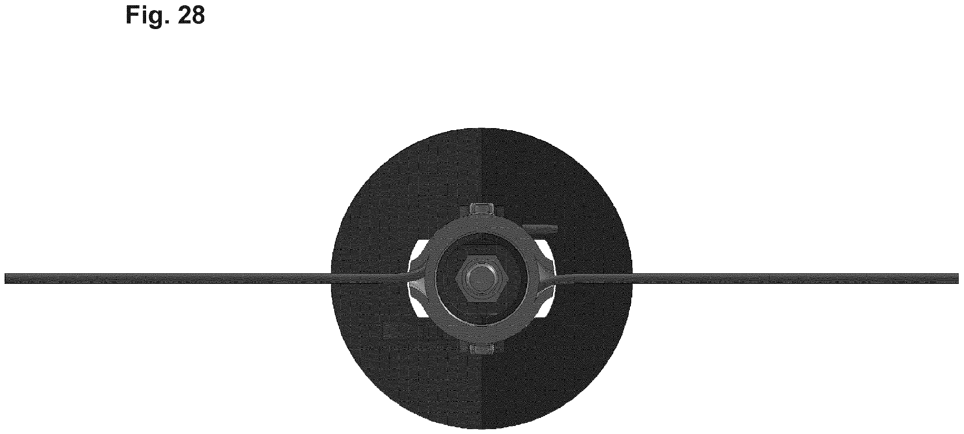

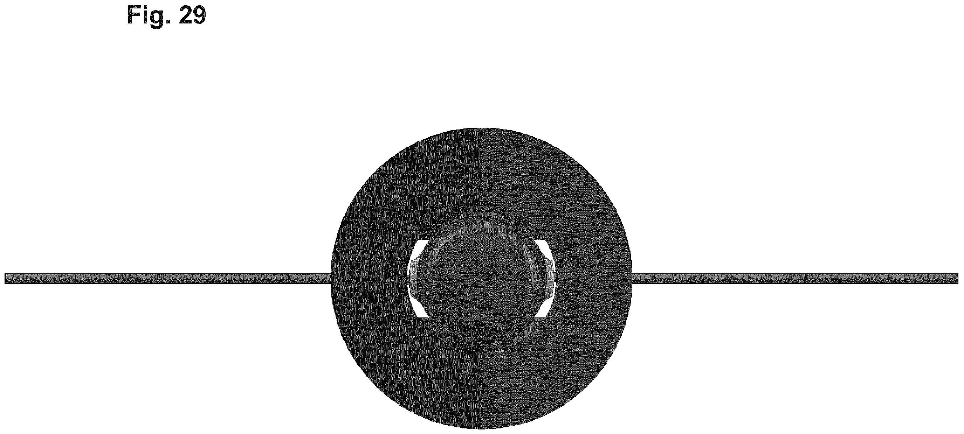

As shown in Figs. 18-21, the cartridge housing assembly houses the cartridge body. The cartridge body includes (see Figs. 22-30) a slide tube 124 movable along the axis A. The spring 62 (see Fig. 3) engages the slide tube 124 to bias the slide tube 124 downwardly. As shown in Fig. 26, lift projections 128 are formed on the exterior of the slide tube 124, and each projection 128 is engageable by the ramp 86 on the associated flyweight 74 to cause axial upward movement of the slide tube 124. Line slots 132 are defined through the slide tube 124 to accommodate the lines L during axial movement of the slide tube 124. The slide tube 124 has a cylindrical inner surface 136, and, at the bottom, axial slots 140, 144.

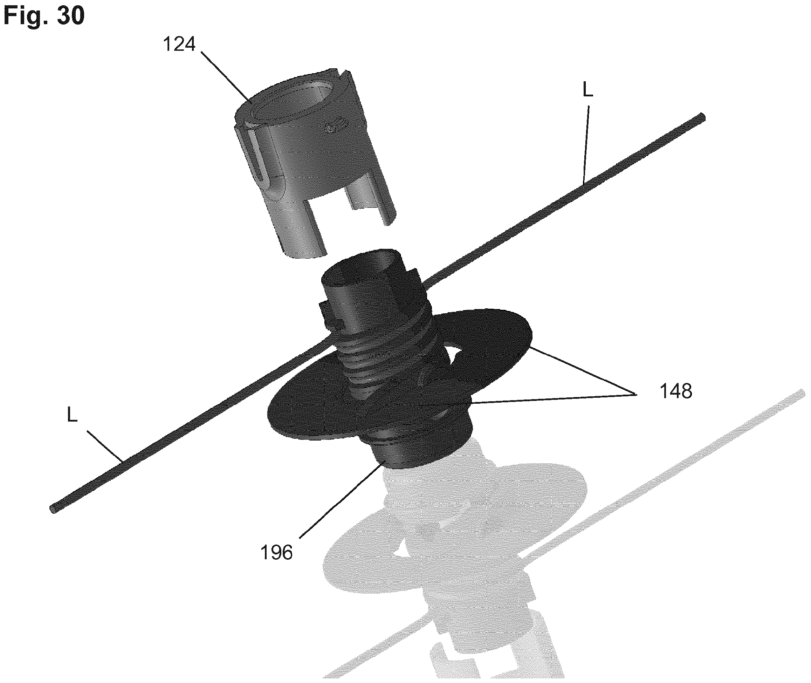

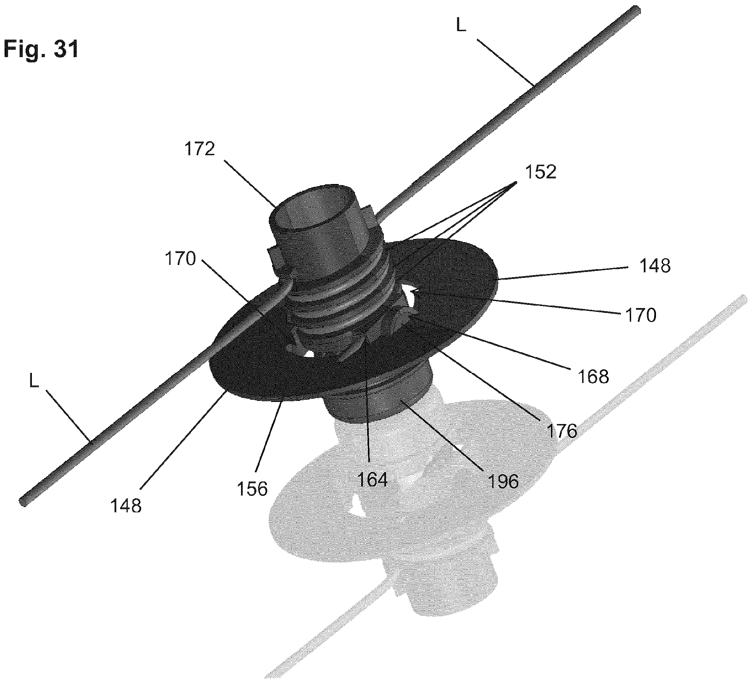

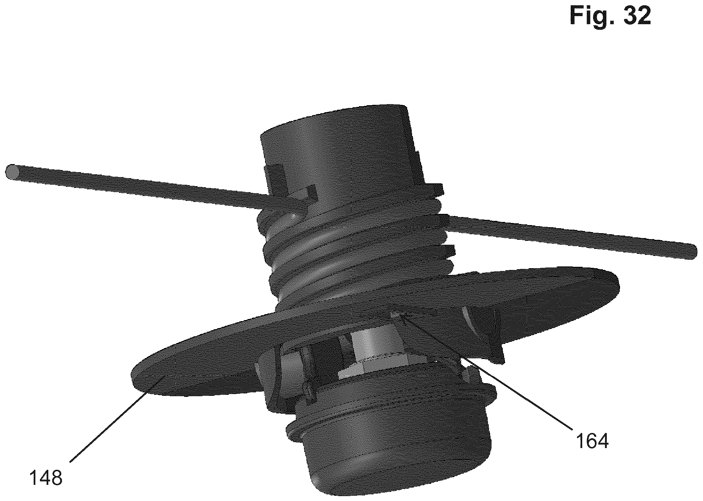

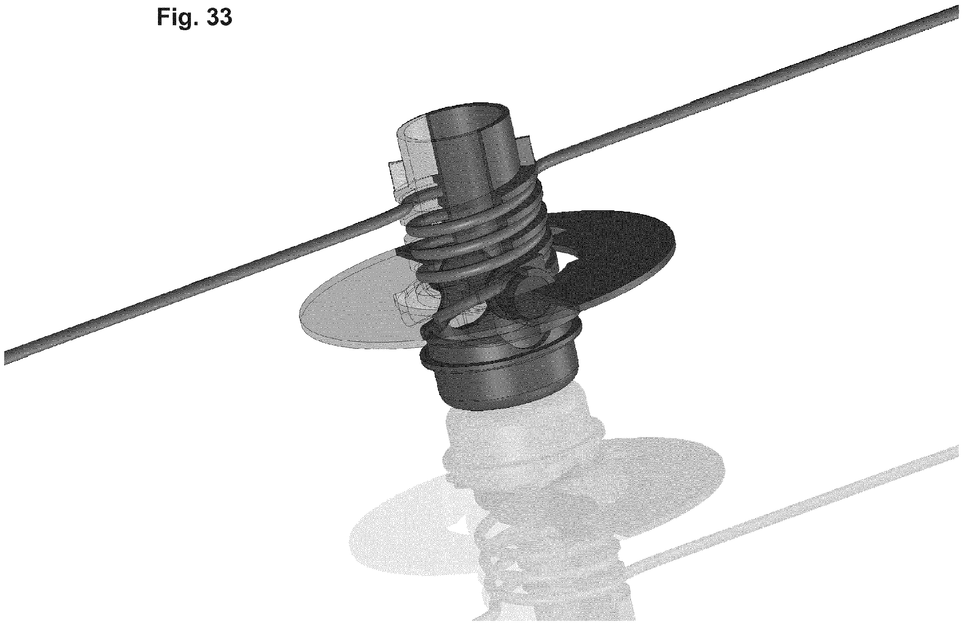

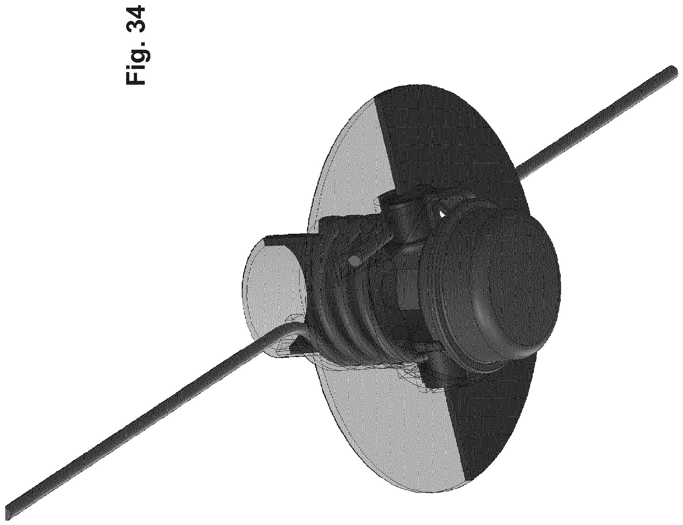

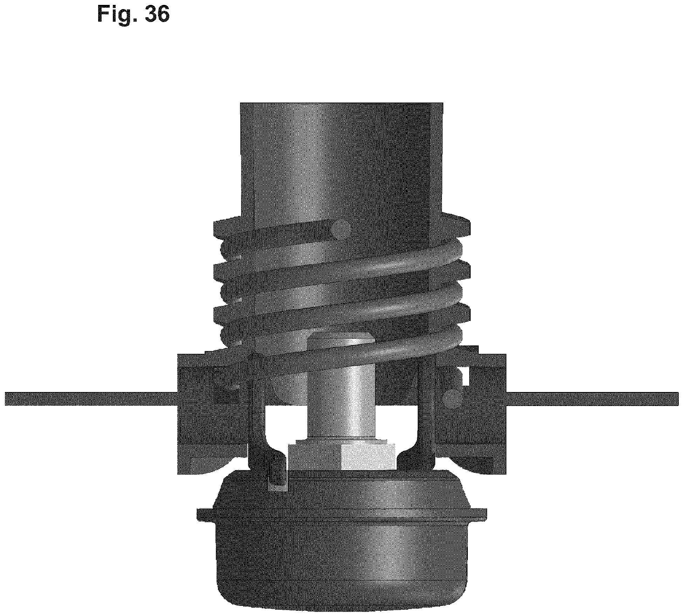

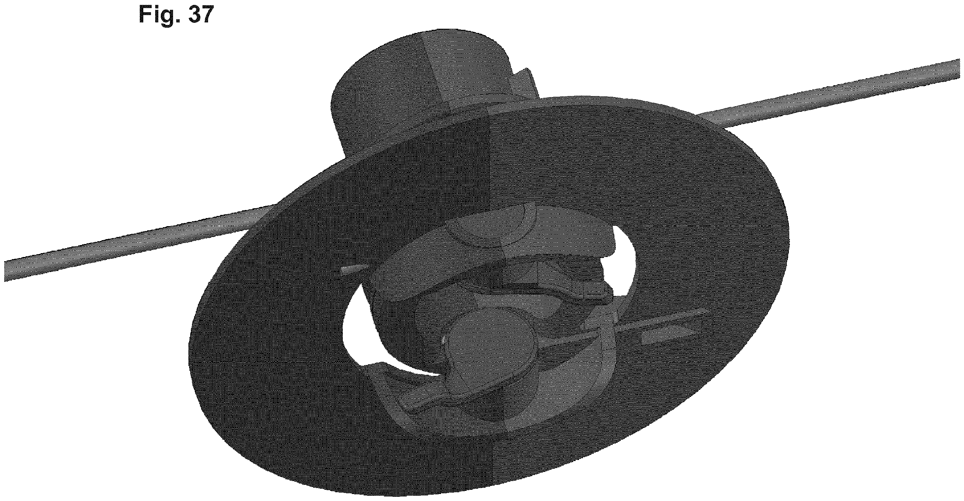

As shown in Figs. 30-38, line guide members 148 define guide slots 152 for the lines L. The guide members 148 cooperate with the inner surface 136 of the slide tube 124 to maintain the each line L in the associated guide slot 152. The guide slots 152 provide a number of windings (e.g., four) about the guide members 148. The number of windings and/or the structure of the guide slots 152 may be determined based on the desired effect (e.g., friction) on the lines L during dispensing, retention, etc.

The guide members 148 provide a radially-extending divider plate 156 to divide the cavity 110 into (see Fig. 3) upper and lower line compartments 160 for line to be dispensed (not shown). Each guide member 148 defines a line opening 164 communicating between the associated guide slot 152 and line compartment 160. Each line L is stored in a separate compartment 160 and travels through a separate guide slot 152 to avoid interference between the lines L.

The guide members 148 cooperate to define a pair of pivot openings 168, and the divider plate 156 defines opposite slots 170. The guide members 148 have an upper edge 172 engageable with the rim 54 on the top member 18 to inhibit relative axial movement between the guide members 148 and the top member 18. The slide tube 124 is thus axially movable relative to the guide members 148.

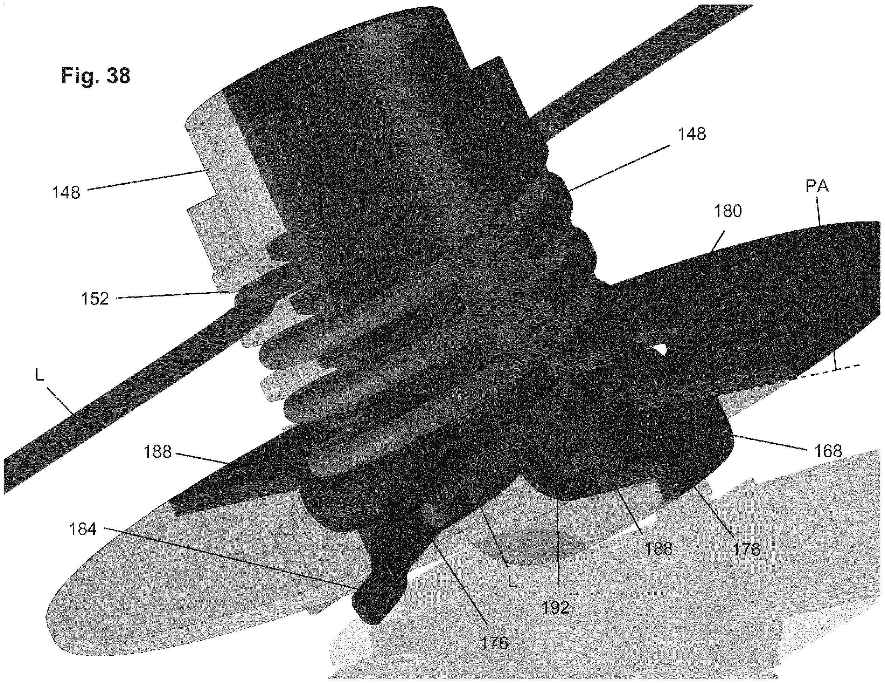

As shown in Fig. 38, brake members 176 are pivotably supported by the guide members 148. Each brake member 176 includes a pivot post 180 supported in the associated pivot opening 168 for movement about a pivot axis PA. Each pivot axis PA is transverse to the axis A and, in the illustrated construction, intersects the axis A. As illustrated, each brake member 176 pivots about the same pivot axis PA. In other constructions (not shown), each brake member 176 may be supported with the associated pivot axis PA being different from the other and/or oriented differently relative to the axis A.

An arm 184 extends from the pivot post 180, and a line slot 188 is defined in the pivot post 180. A pinch edge 192 is provided at an end of the line slot 188. The associated line L is selectively "pinched" between the pinch edge 192 and cooperating structure of the guide member 148. The pinch edge 192 is selectively engageable with the associated line L to apply a force to retain or "brake" the line L and disengageable from the line L to allow movement of or "release" the line L (e.g., under the effect of centrifugal force during rotation of the trimmer head 14).

A bump member 196 is connected to the bottom end of the slide tube 124 for movement with the slide tube 124. The guide members 148 and the assembly of the bump member 196 and the slide tube 124 cooperate to capture each other. The axial slots 140 in the slide tube 124 receive the portions of the guide members 148 defining the pivot openings 168 and the supported pivot posts 180. Meanwhile, portions of the slide tube 124 extend through the slots 170 in the divider plate 156 for connection to the bump member 196.

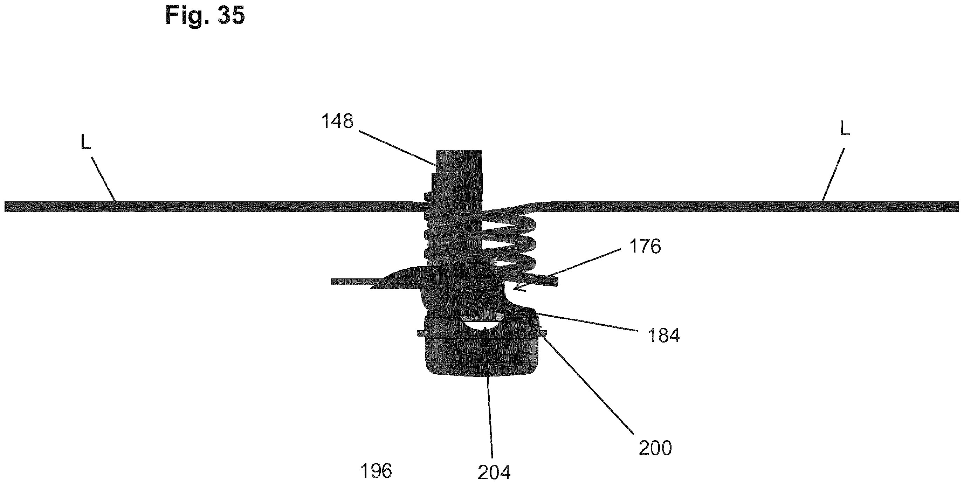

As shown in Fig. 35, arm slots 200 and pivot recesses 204 are defined in the rim 208 of the bump member 196. The end of each arm 184 of an associated brake member 176 is received in an arm slot 200 and in an axial slot 144 on the slide tube 124. Axial movement of the guide tube 124 and the bump member 196 causes pivoting movement of the brake members 176. The pivot recesses 204 accommodate the pivot posts 180 when the bump member 196 is moved axially upwardly.

In operation, the line cartridge 10 is positioned in the trimmer head 14 with the housing members 18, 22 connected (see Fig. 3). The spring 62 biases the slide tube 124 and the bump member 196 downwardly relative to the guide members 148, causing the brake members 176 to pivot to the braking position, in which the pinch edge 192 engages the line L to prevent dispensing of the line L.

To dispense line L, the line cartridge 10 is operable in an auto-feed mode (with the auto-feed trimmer head 14) or in a bump-feed mode. In each mode, the slide tube 124 and the bump member 196 are moved upwardly, causing the brake members 176 to pivot to the release position, in which the pinch edge 192 disengages and releases the line L to allow the line L to be dispensed under centrifugal force.

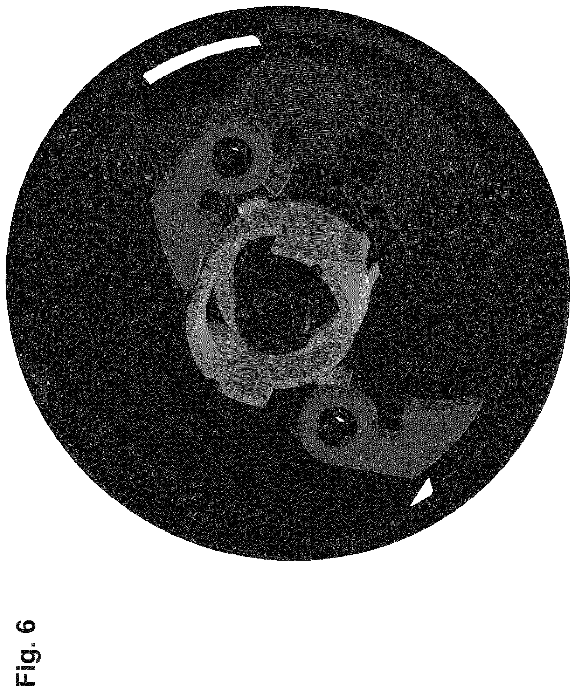

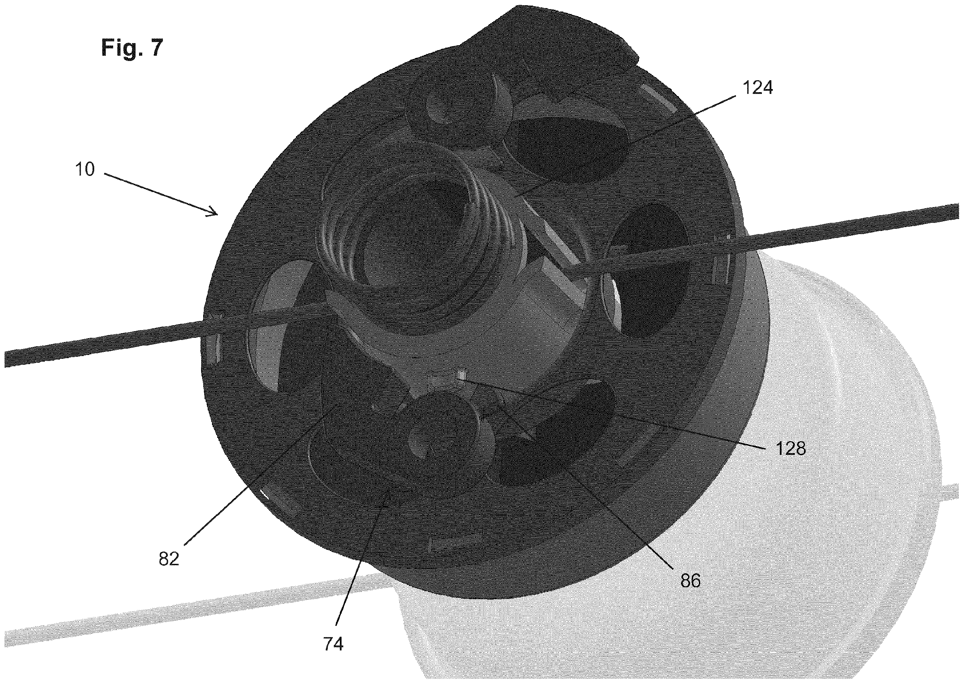

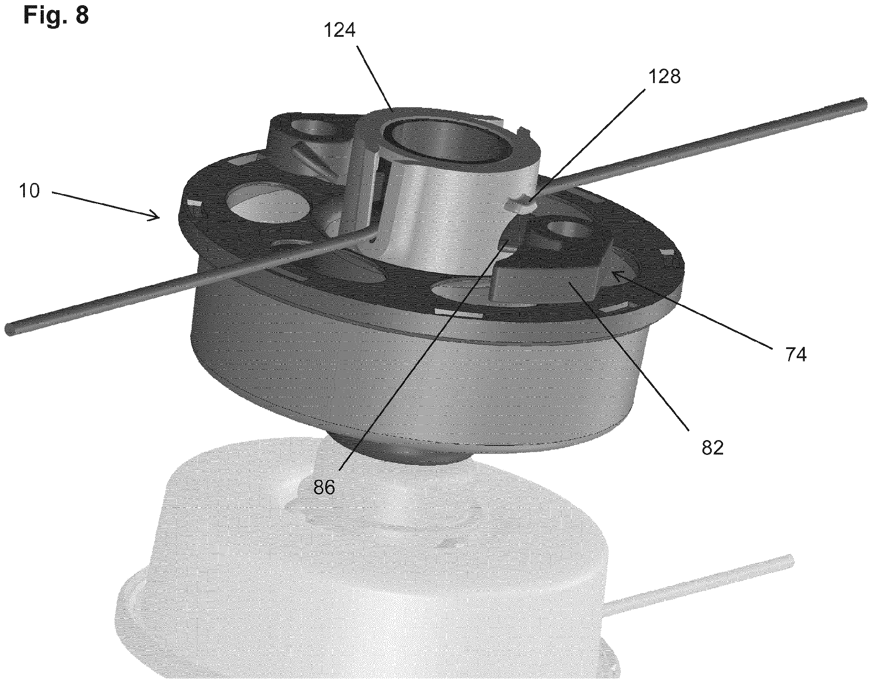

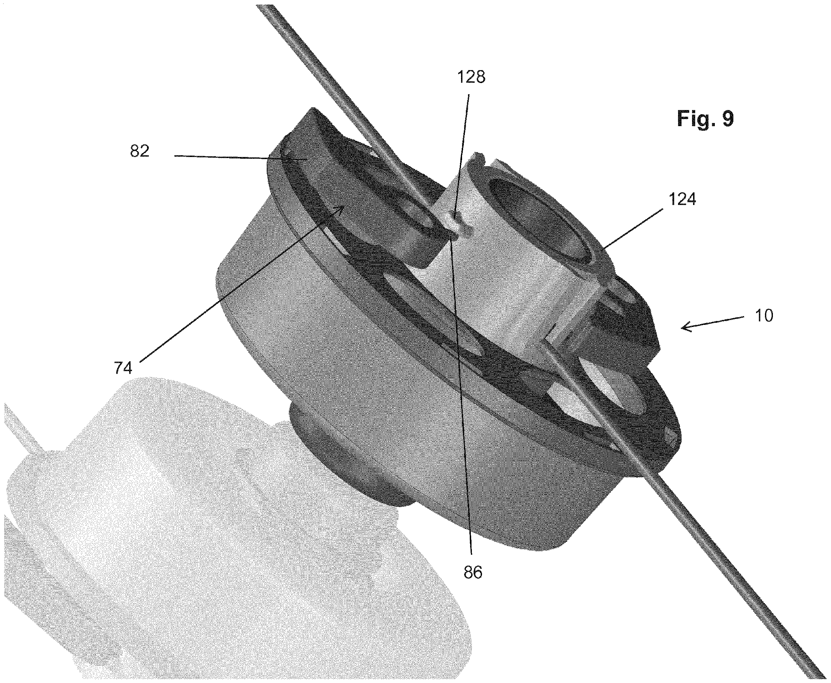

In an auto-feed mode (see Figs. 7-9), when line L needs to be dispensed (e.g., because it has been broken), the reduced amount of line causes the rotational speed of the trimmer head 14 to increase. As a result, the weighted arms 82 of the flyweights 74 pivot outwardly (see Figs. 5-6 and 8-9), bringing the ramps 86 into engagement with the lift projections 128. The engagement of the ramps 86 and the lift projections 128 causes the slide tube 124 to move axially upwardly against the biasing force of the spring 62. The bump member 196 moves upwardly with the slide tube 124, causing the brake members 176 to pivot to the release position and the pinch edge 192 to disengage the line L. With the line L released, centrifugal force causes the line L to be drawn out of the line cartridge 10.

As more line L is dispensed, the rotational speed of the trimmer head 14 decreases. The flyweights 74 pivot inwardly, disengaging the ramps 86 from the lift projections 128 (see Fig. 7). The slide tube 124 and the bump member 196 move downwardly under the biasing force of the spring 62. The brake members 176 pivot to the braking position so the pinch edge 192 re-engages the line L to pinch or brake the line L and prevent further dispensing.

In a bump-feed mode, the bump member 196 is engaged against the ground and pushed upwardly. Upward movement of the bump member 196 causes the slide member 124 to move upwardly against the force of the spring 62 and causes the brake members 176 to pivot to the release position and release the line L. Centrifugal force causes the line L to be drawn out of the line cartridge 10.

When the bump member 196 disengages the ground, the spring 62 biases the slide tube 124 and the bump member 196 downwardly. This downward movement causes the brake members 176 to pivot to the braking position so the pinch edge 192 re-engages the line L to pinch or brake the line L and prevent further dispensing.

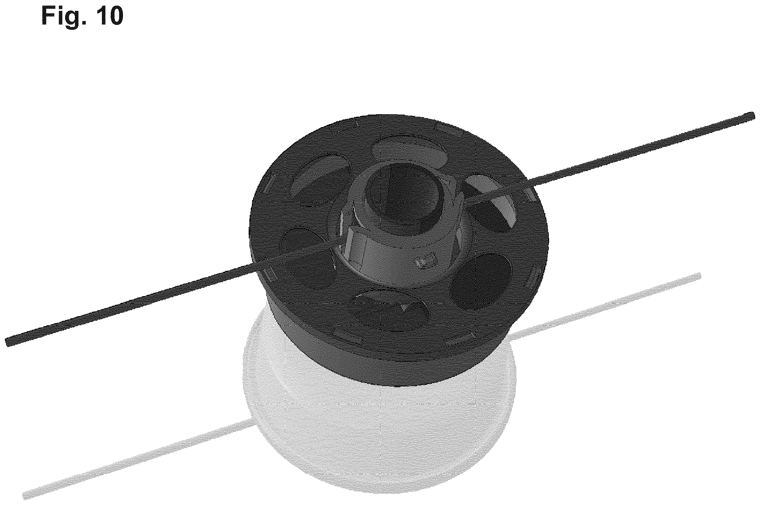

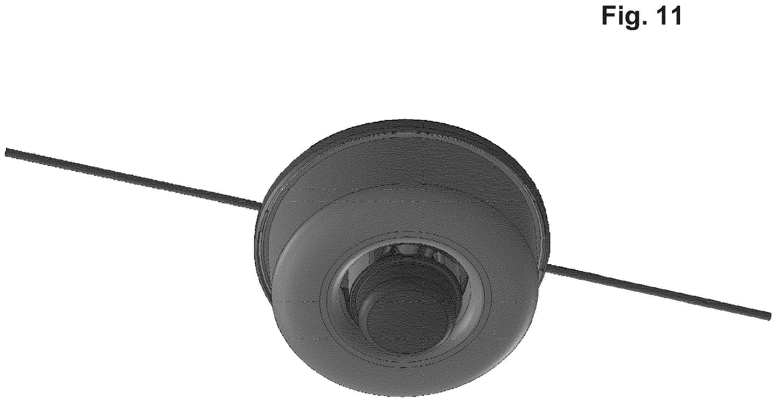

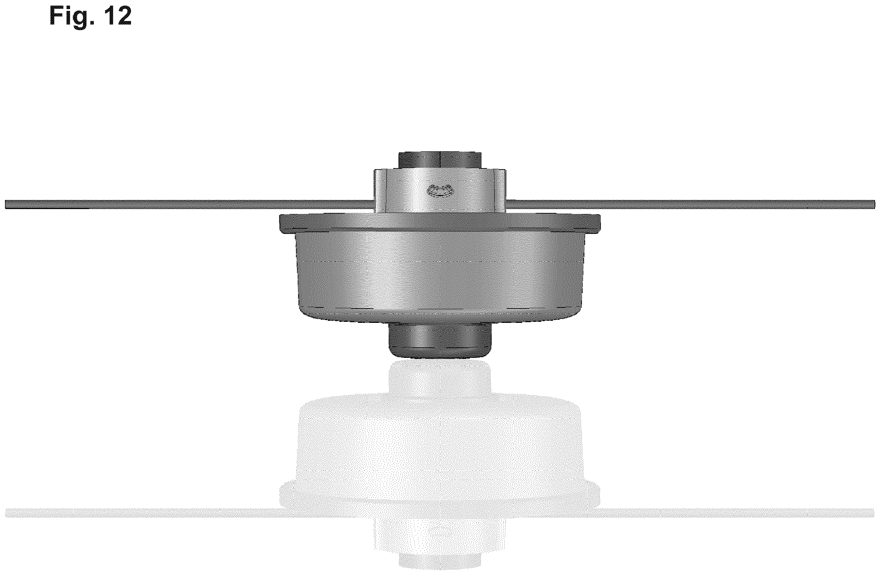

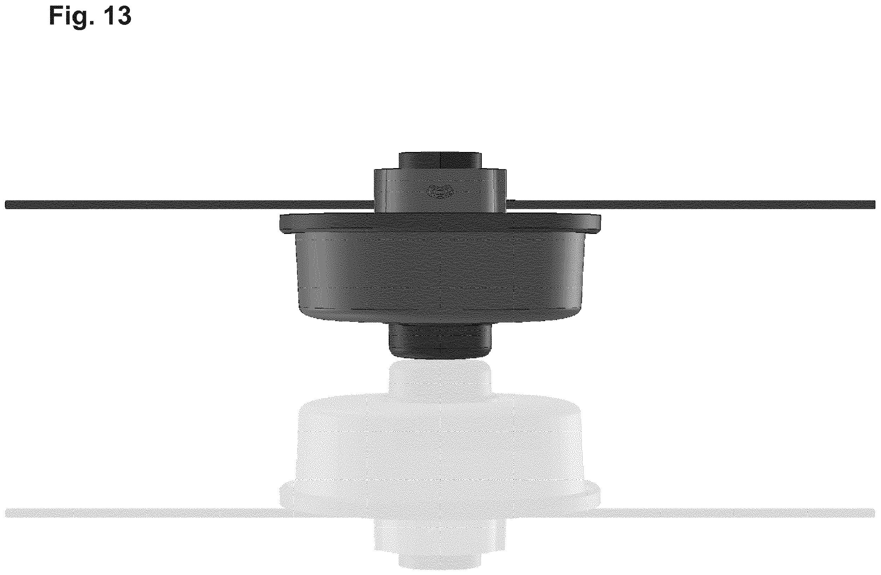

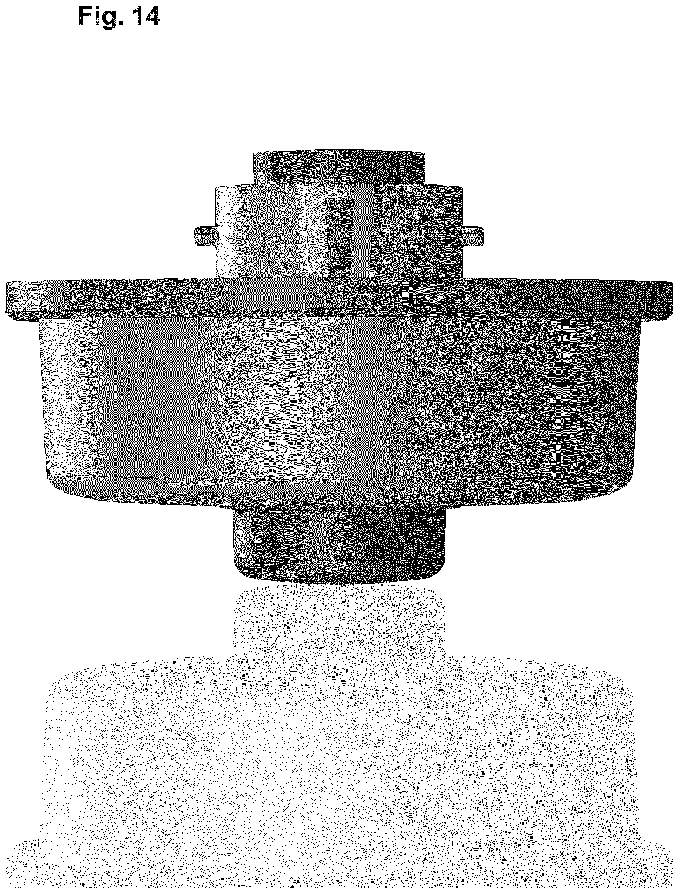

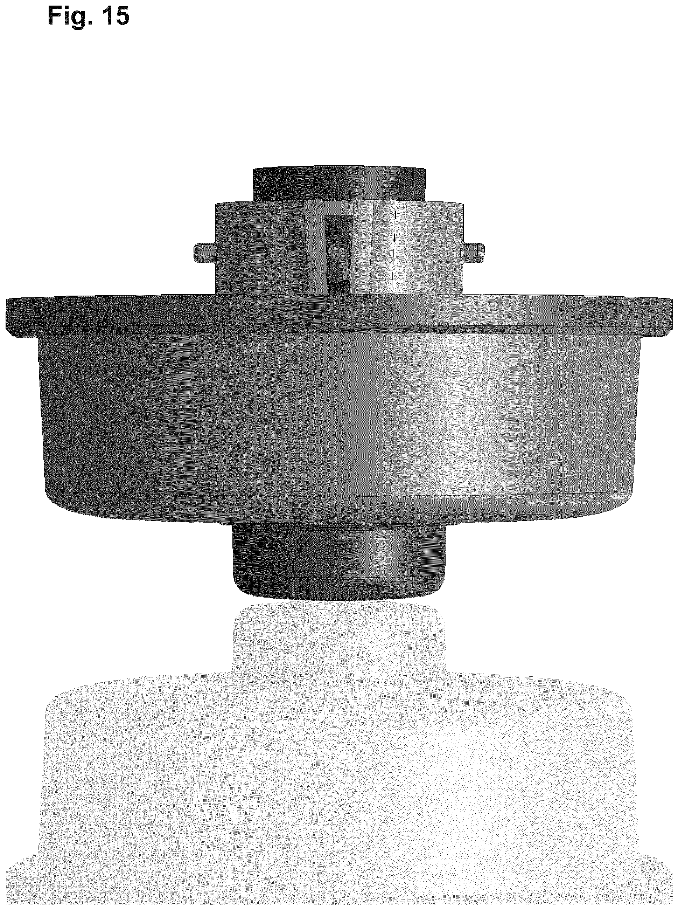

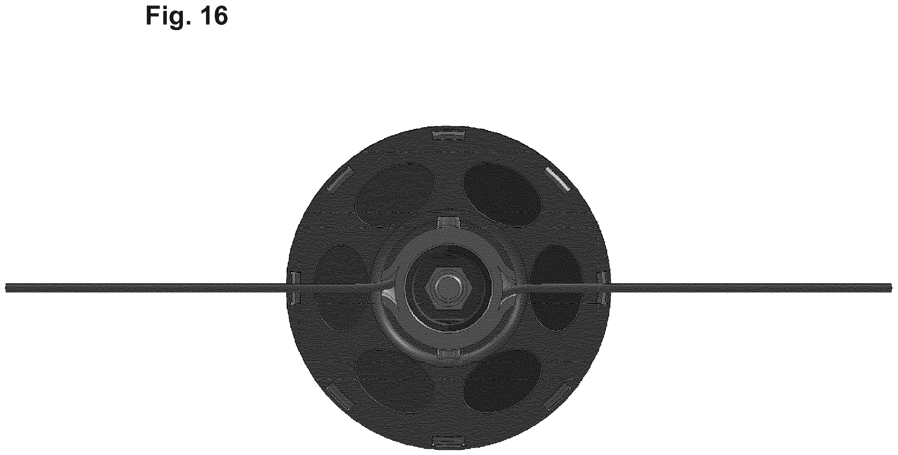

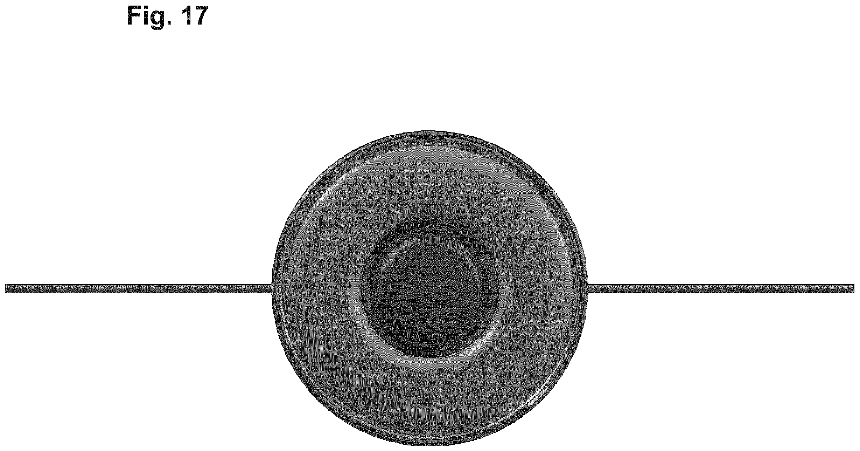

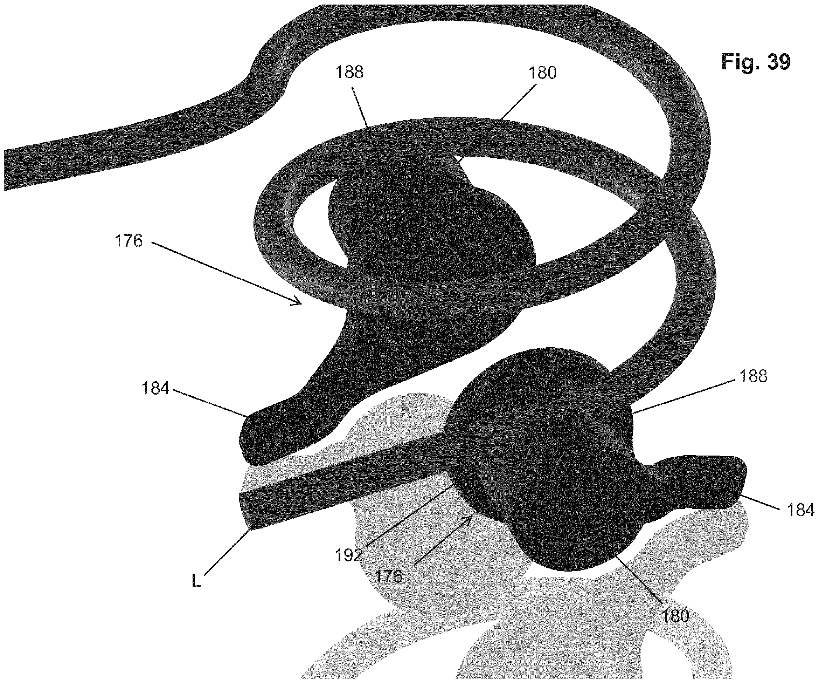

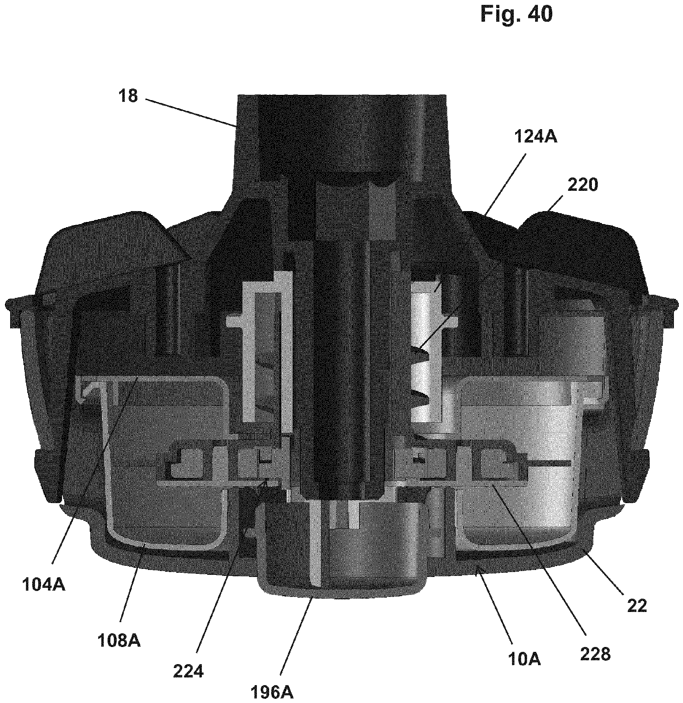

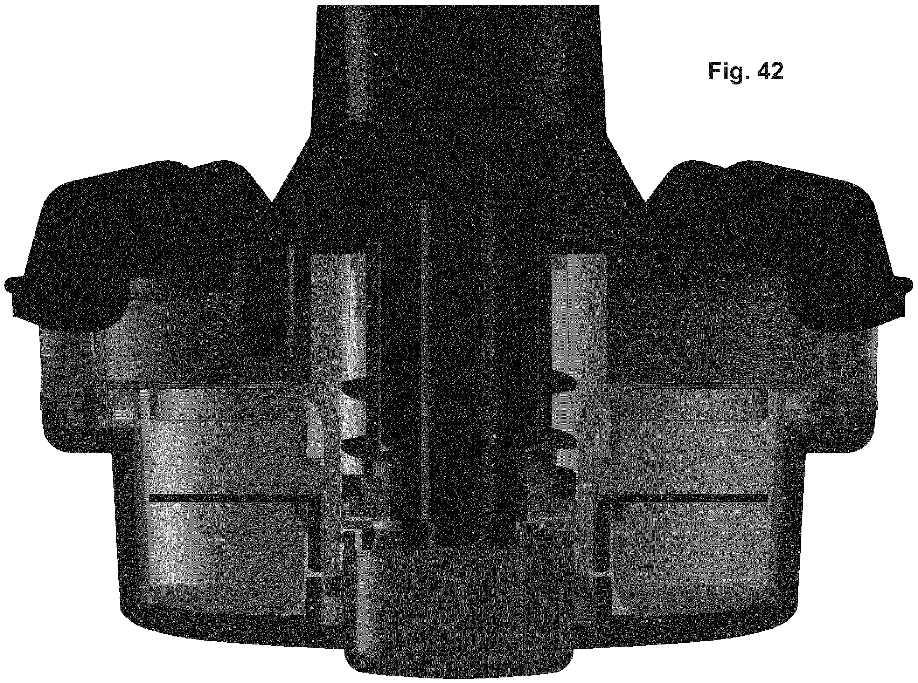

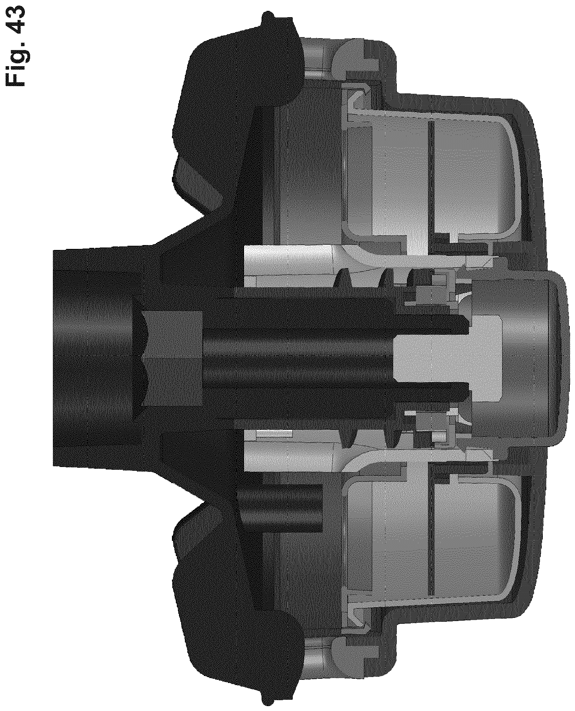

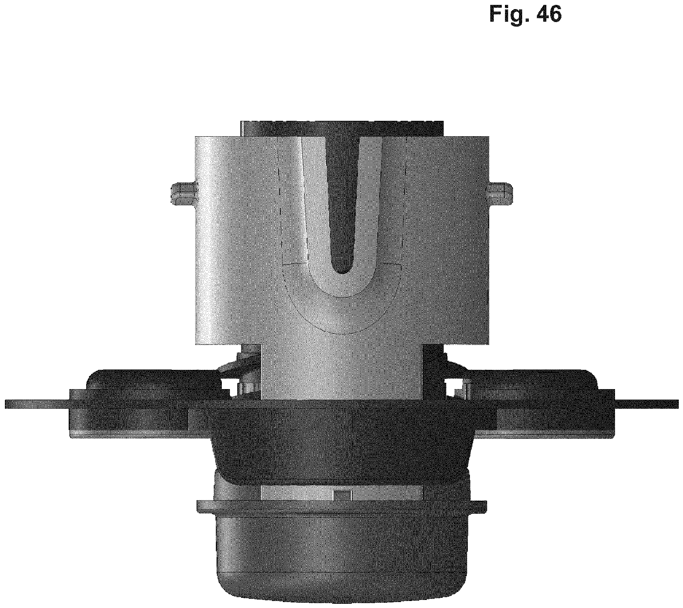

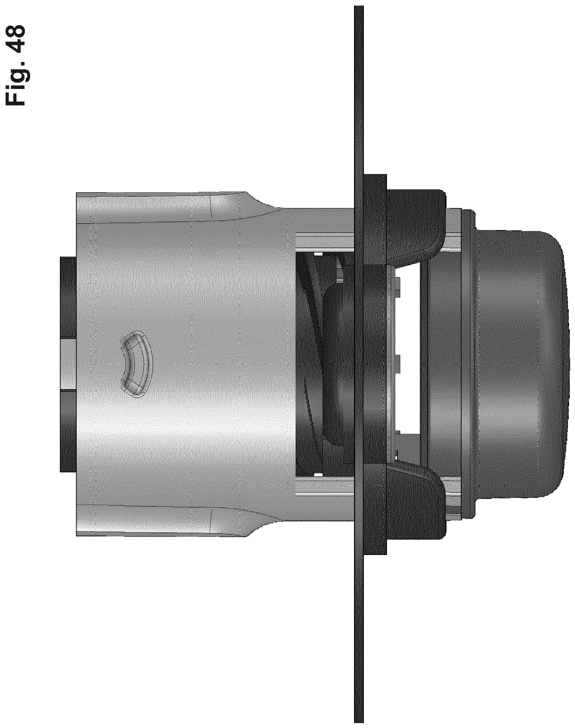

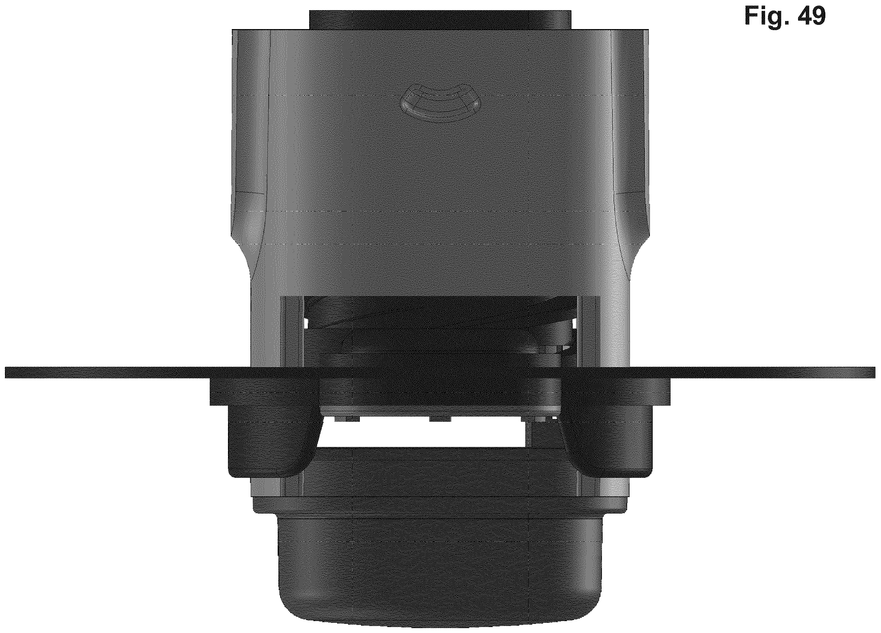

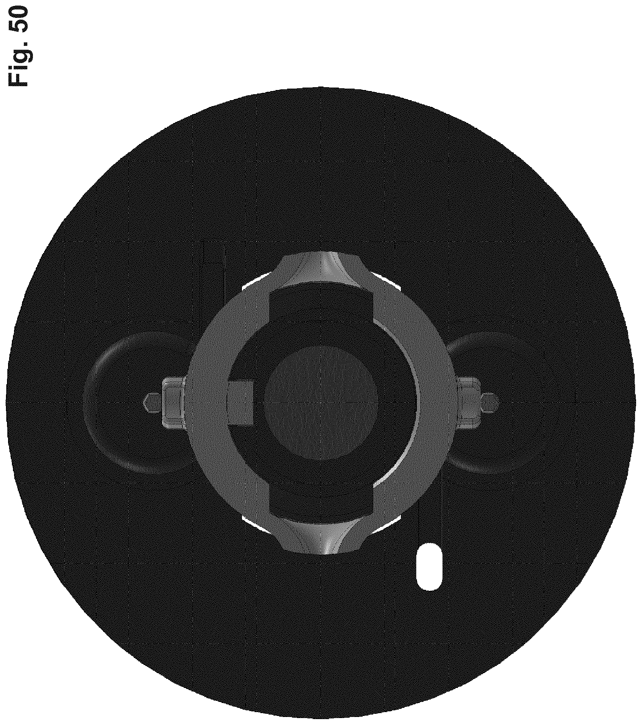

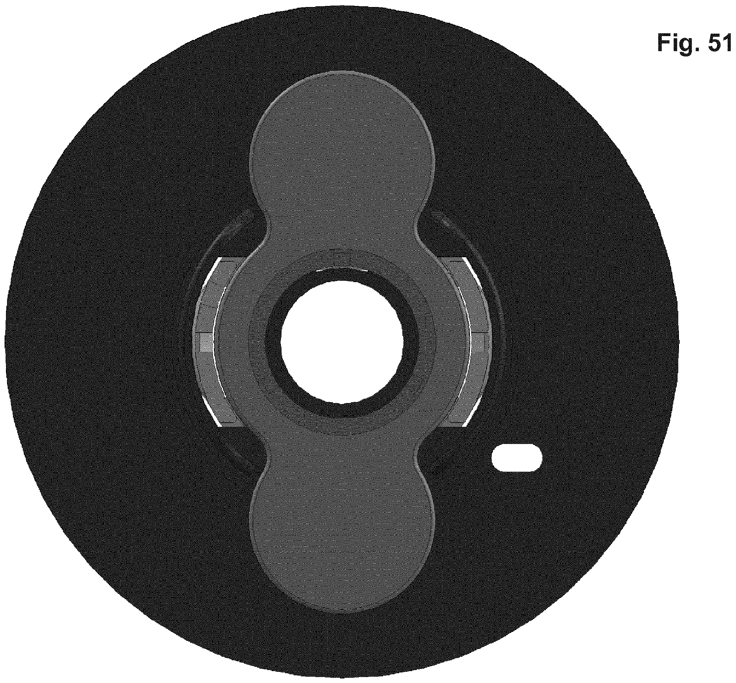

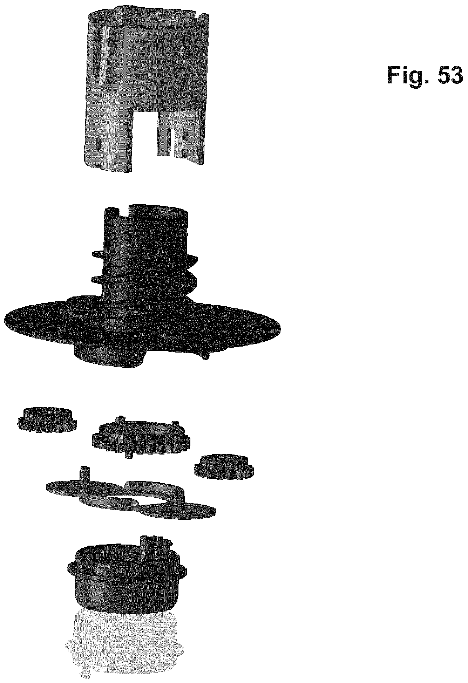

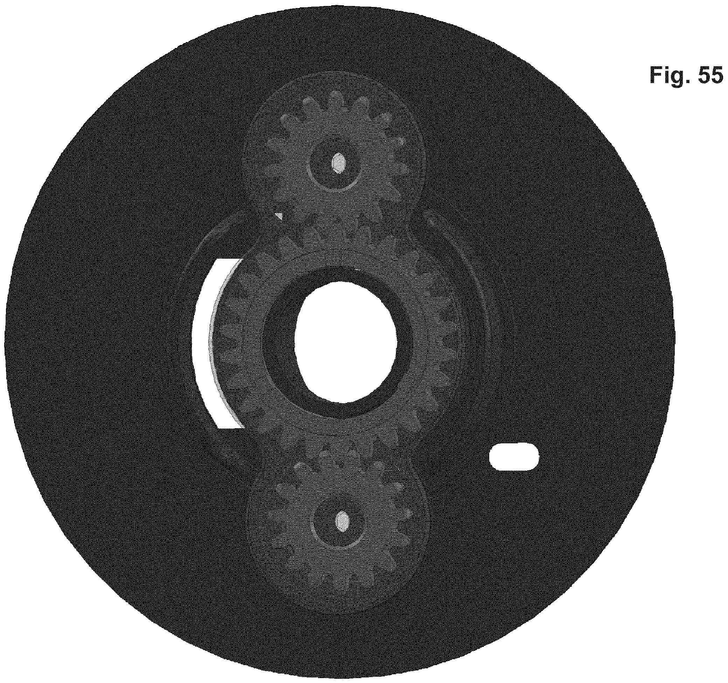

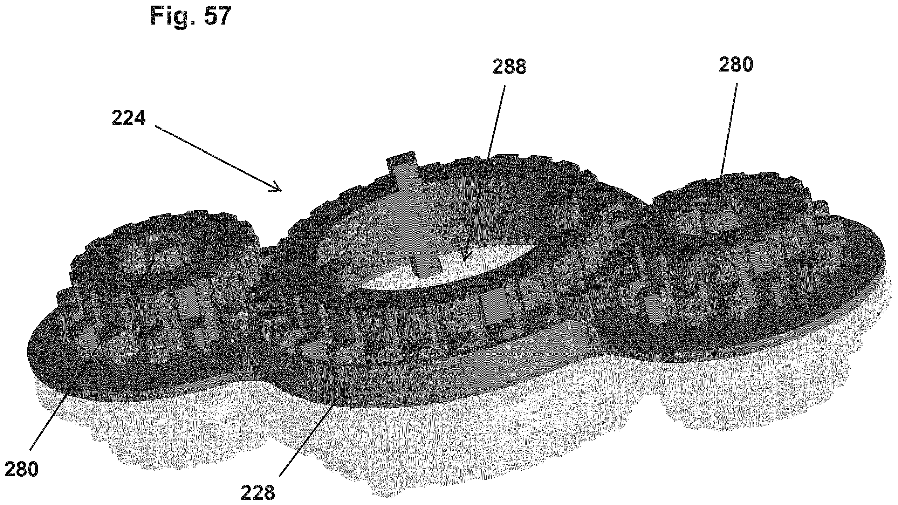

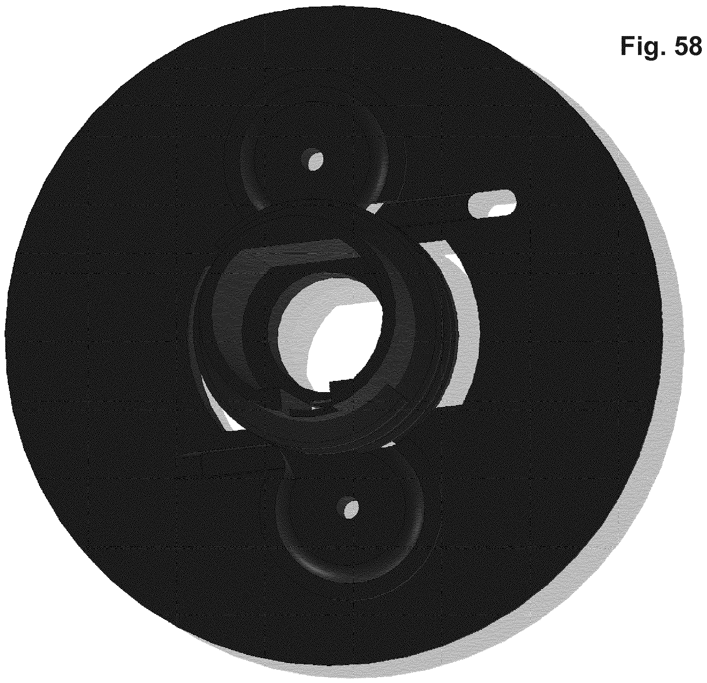

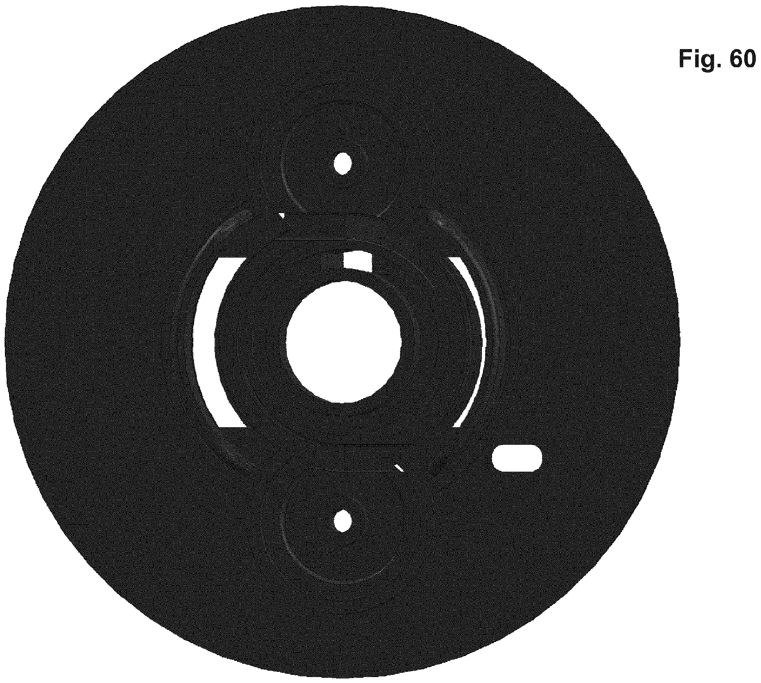

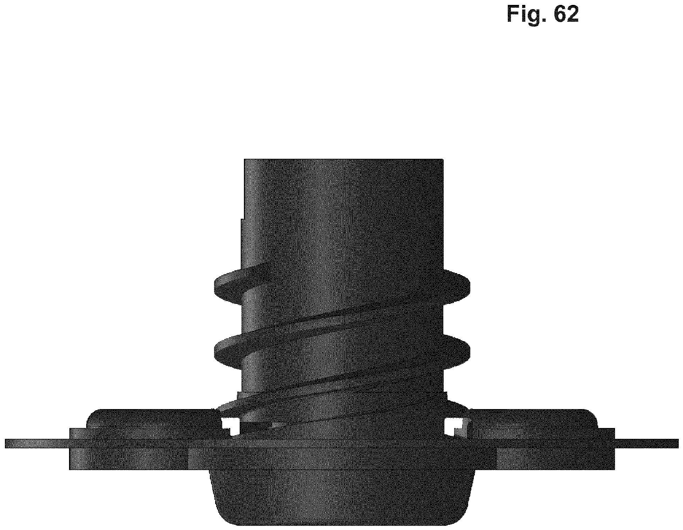

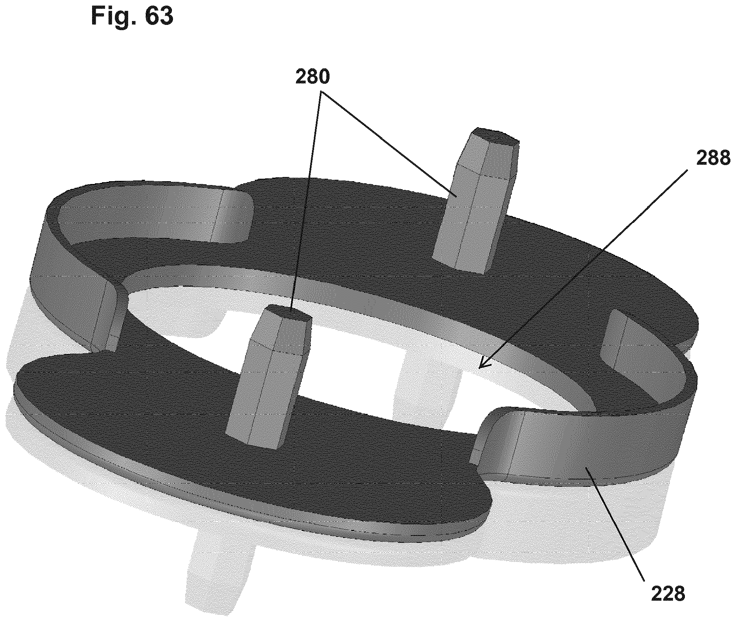

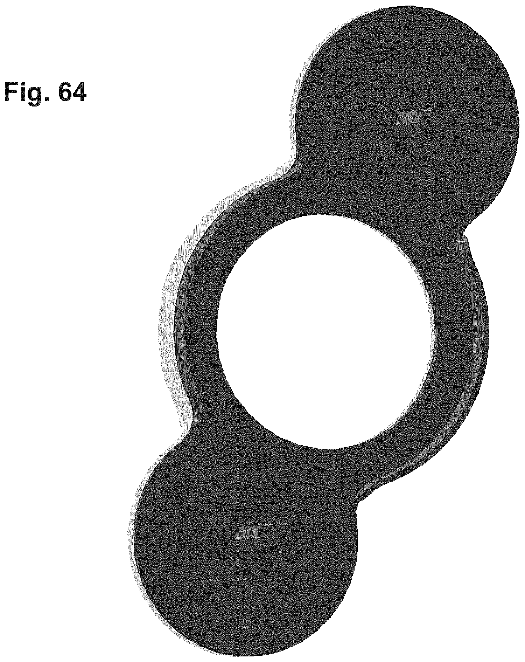

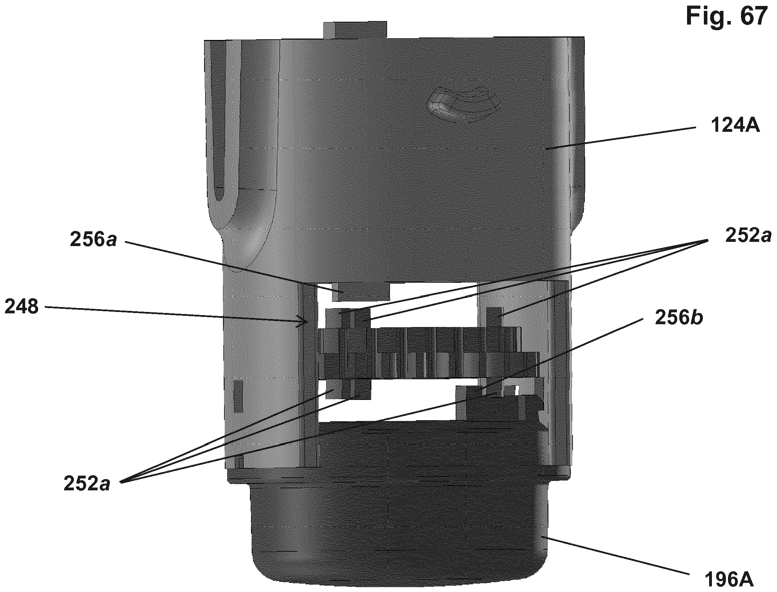

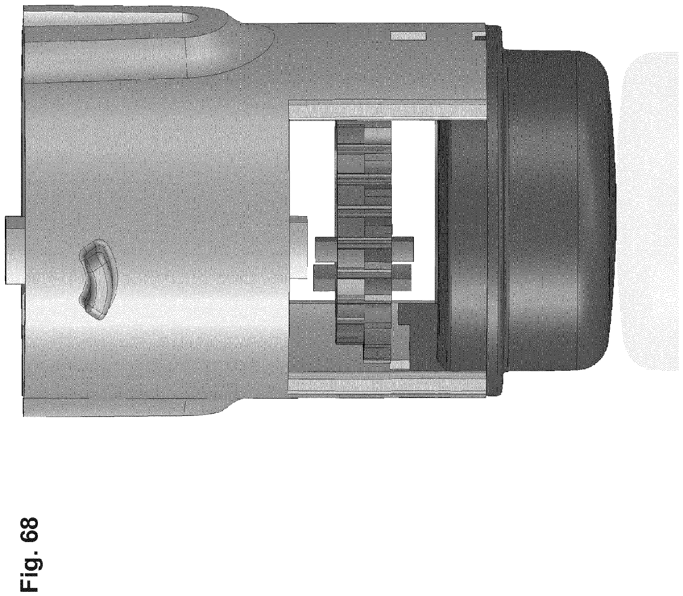

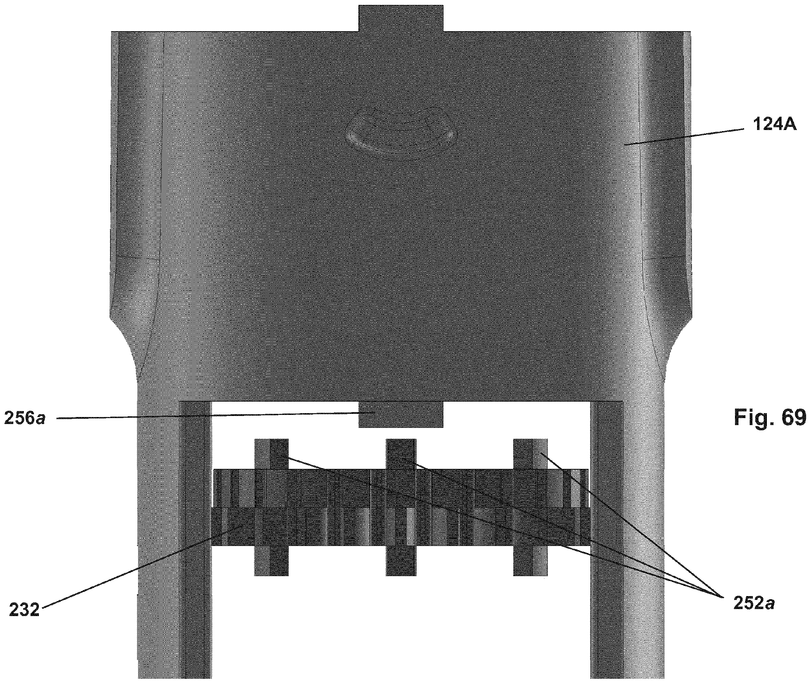

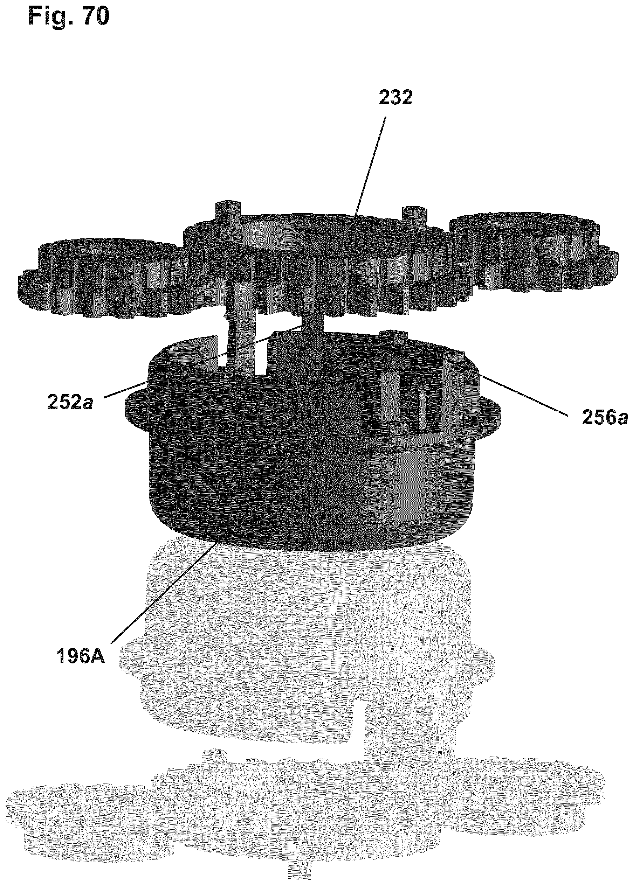

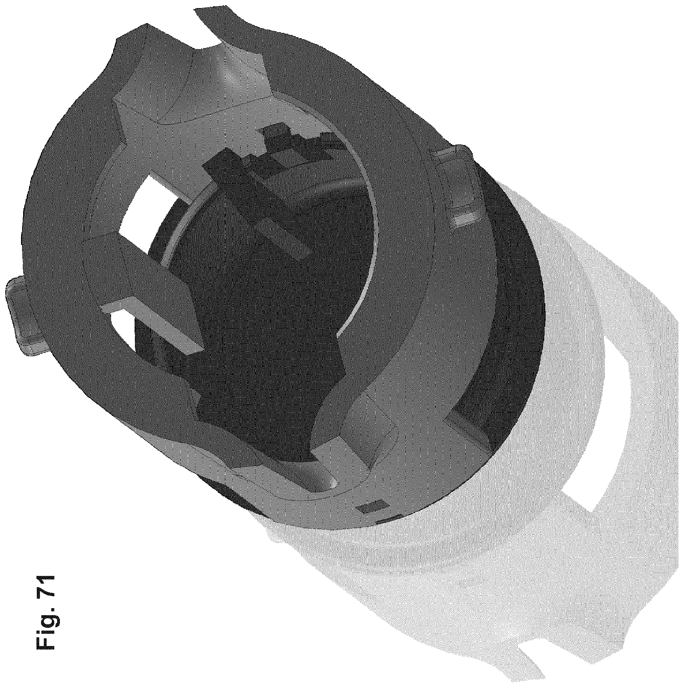

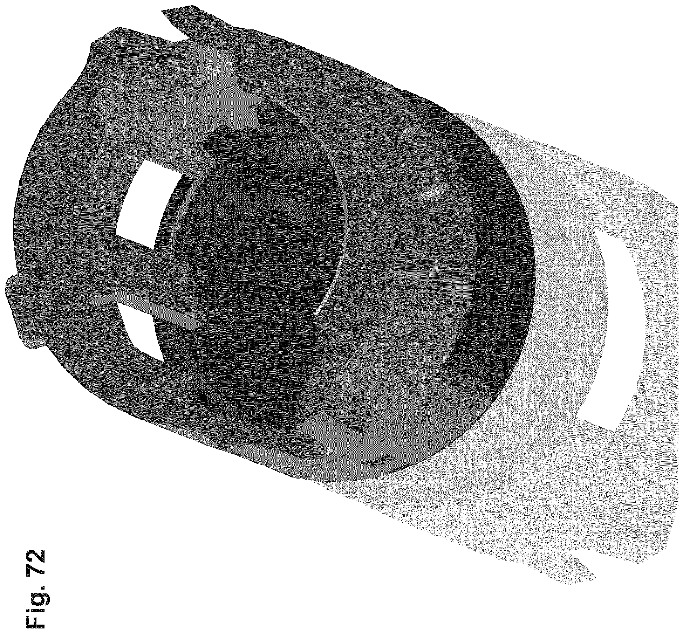

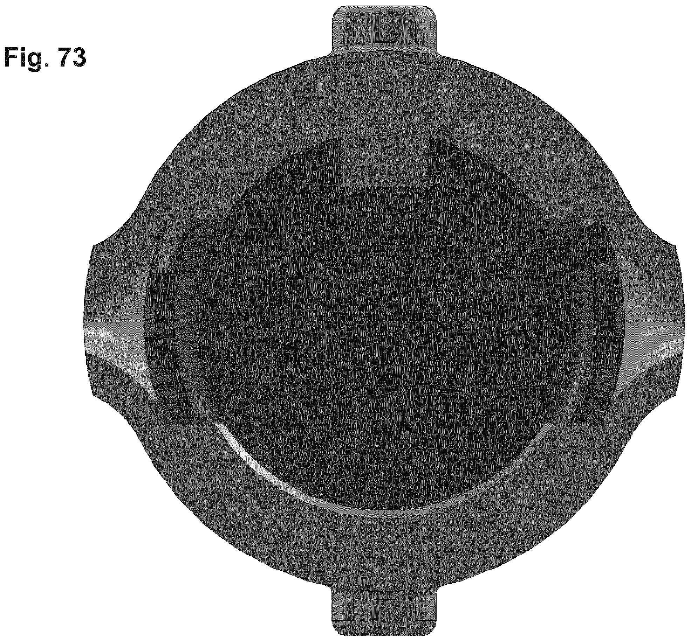

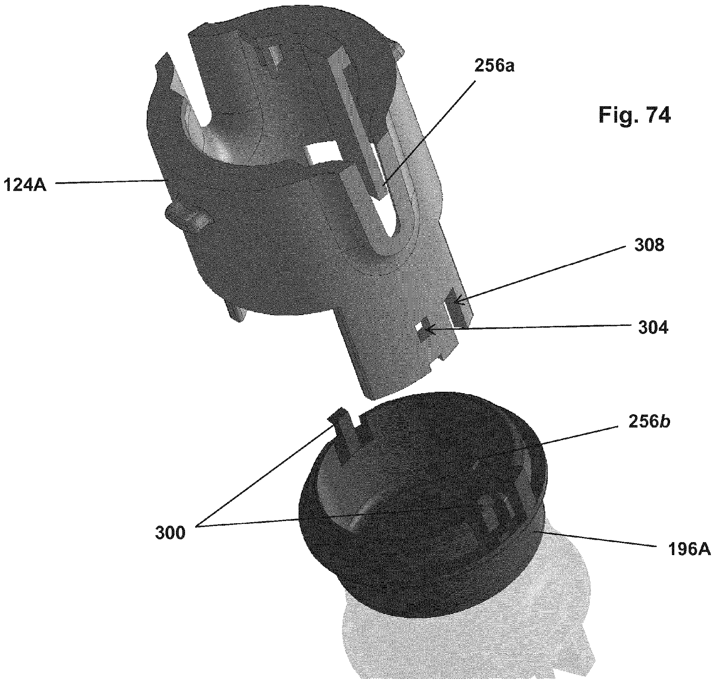

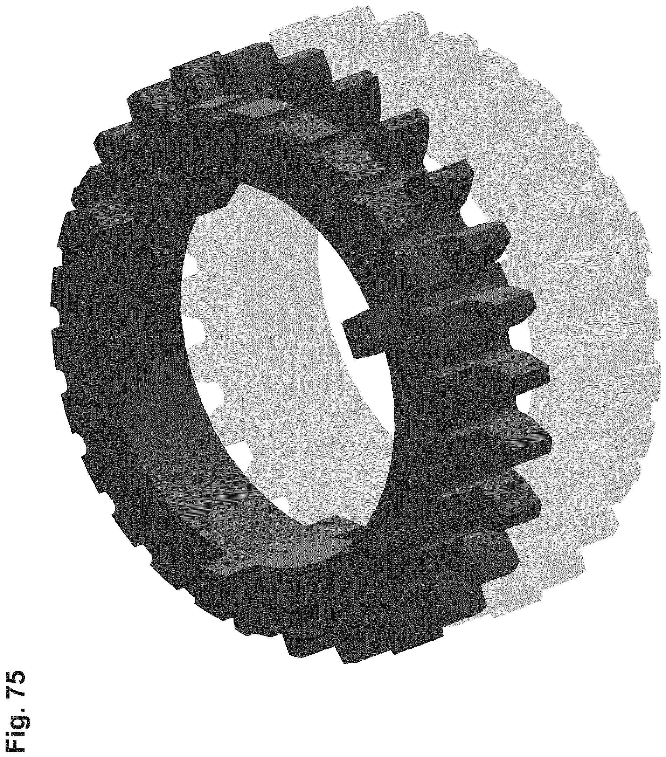

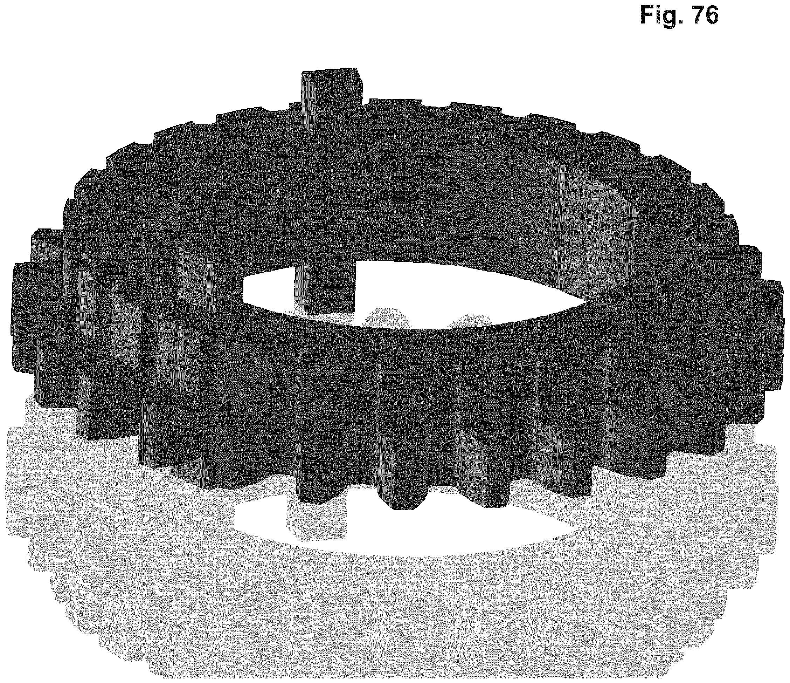

Figs. 40-76 illustrate an alternative construction of a line cartridge 10A supportable in the trimmer head 14 for use on a trimmer, such as the exemplary string trimmer T shown in Fig. 1. The line cartridge 10A is similar to the line cartridge 10 described above and illustrated in Figs. 2-39, and common elements have the common reference numbers "A".

As with the line cartridge 10, the line cartridge 10A is operable to dispense line L in an auto-feed mode (when supported in the auto-feed trimmer head 14) or in a bump-feed mode (when supported in the auto-feed trimmer head 14 or when supported in a trimmer head without auto-feed).

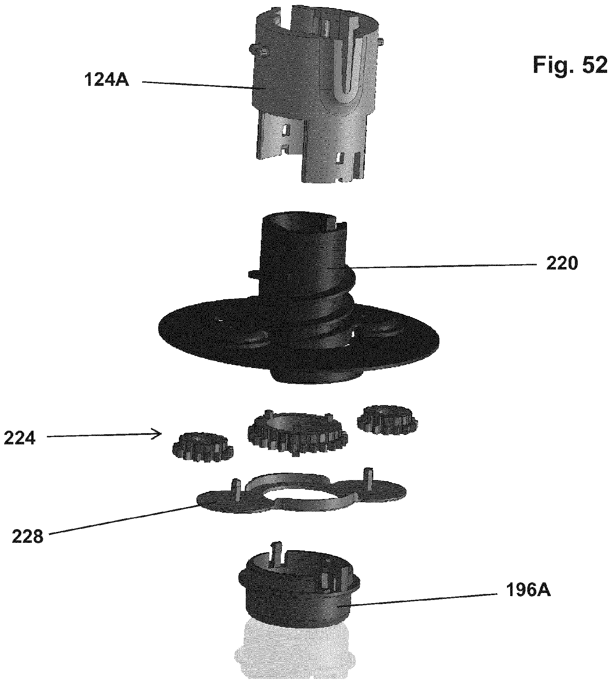

The line cartridge 10A includes (see Figs. 40-43) a cartridge housing assembly, provided by a top plate 104A and a bottom cover 108A, housing a cartridge body. The cartridge body includes (see Fig. 52) a slide tube 124A, a line guide member 220 (similar to the line guide members 148) and a bump member 196A. In this construction, rather than the brake members 176, the line cartridge 10A includes a gear brake assembly 224 and a gear support 228 cooperating with the line guide member 220 to support the gear brake assembly 224.

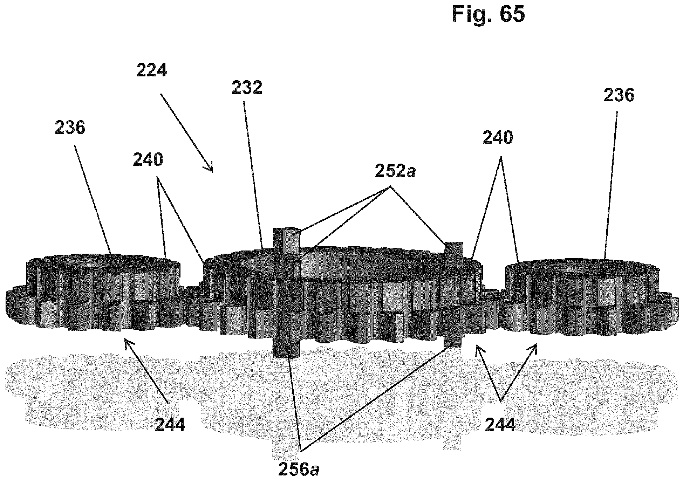

As shown in Fig. 65, the gear brake assembly 224 includes a number of gears (e.g., three) including a main gear 232 intermeshed with a cooperating gear 236 for each line L to be dispensed. Each gear 232, 236 has a gear portion 240 and a gripping portion 244. The gear portions 240 interengage to coordinate movement of the gears 232, 236. A line L is threaded between the gripping portions 244 of adjacent gears 232, 236. The gripping portions 244 are configured (e.g., have a roughened surface, a frictional material, combinations thereof, etc.) to apply friction to the line L.

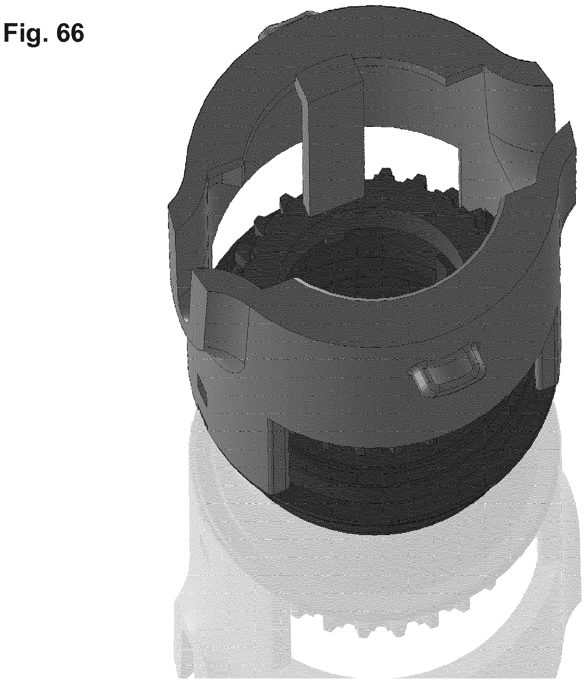

The gear brake assembly 224 is operable between a release condition, in which the gears 232, 236 are free to rotate to allow the lines L to be dispensed, and a braking condition, in which the gears 232, 236 are prevented from rotating to prevent lines L from being dispensed. A stop assembly 248 (see Figs. 66-70) is provided between the gear brake assembly 224 and adjacent structure to selectively place the gear brake assembly 224 in the release condition and in the braking condition.

The gear brake assembly 224 (e.g., the main gear 232) includes a number of stop members 252 selectively engageable with one or more complementary stop members 256 on the adjacent structure. In the illustrated construction, the main gear 232 includes a number first stop members 252a (e.g., three) each selectively engageable with a stop member 256a on the slide tube 124A. The illustrated main gear 232 also includes a number of second stop members 252b (e.g., three) each selectively engageable with a stop member 256b on the bump member 196A.

In the illustrated construction, the stop members 252, 256 are formed with the main gear 232 and the slide tube 124A/the bump member 196A. In other constructions (not shown), the structure of the stop members 252, 256 may be separate from and connected to the main gear 232 and the slide tube 124A/the bump member 196A. For example, the main gear 232 may define an opening receiving a pin providing the stop member(s) 252, 256.

In the illustrated construction, the stop members 252 are equally spaced (by about 120°) about the circumference of the main gear 232. In other constructions (not shown), the number and position of the stop member(s) 252, 256 may be different (e.g., the main gear 232 may include fewer or more than three stop members 252). For example, as discussed below in more detail, the main gear 232 may include only a first stop 252, engageable with the stop member 256 on the adjacent structure (e.g., the slide tube 124A). In another example, the main gear 232 may include one first stop 252a and one second stop 252b, and the slide tube 124A and the bump member 196A may include a number of complementary stop members 256a, 256b (e.g., one, two, three, etc.).

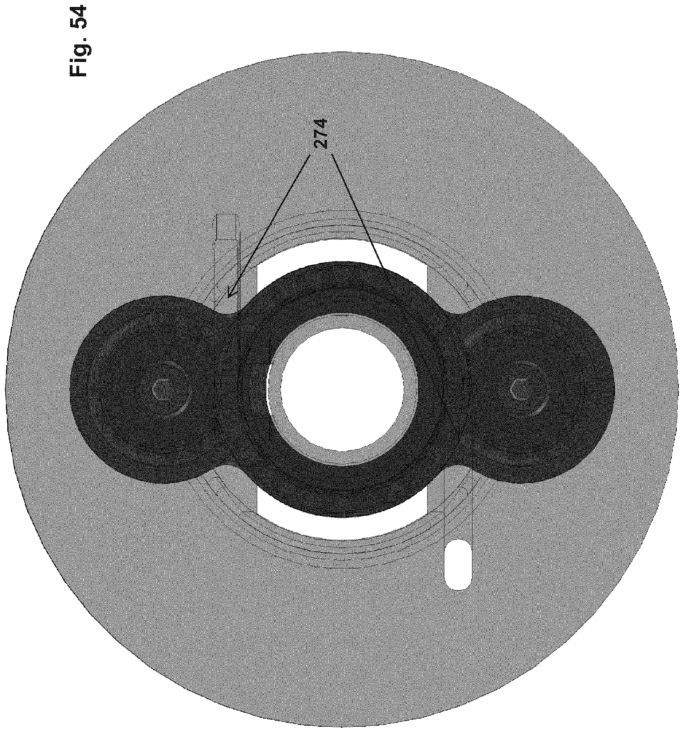

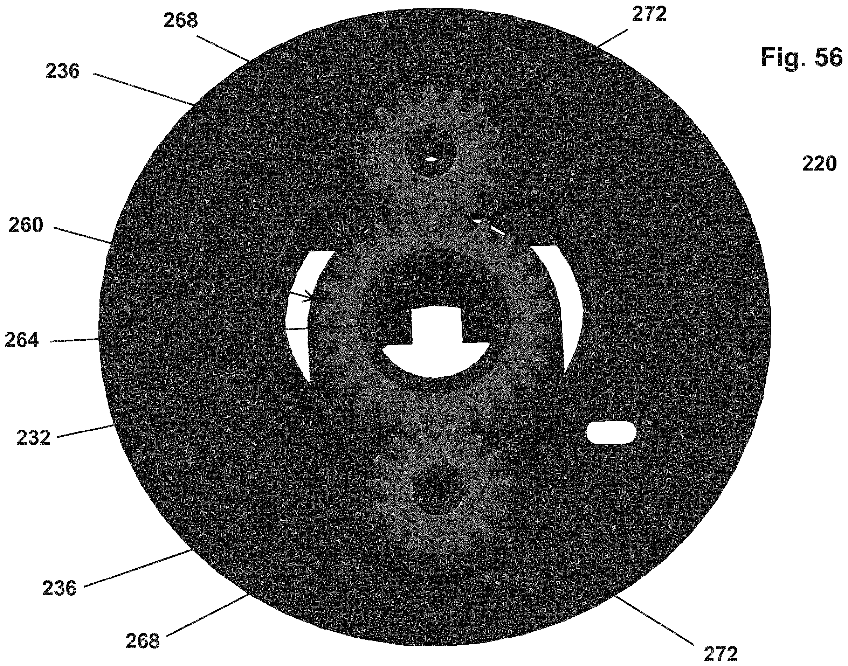

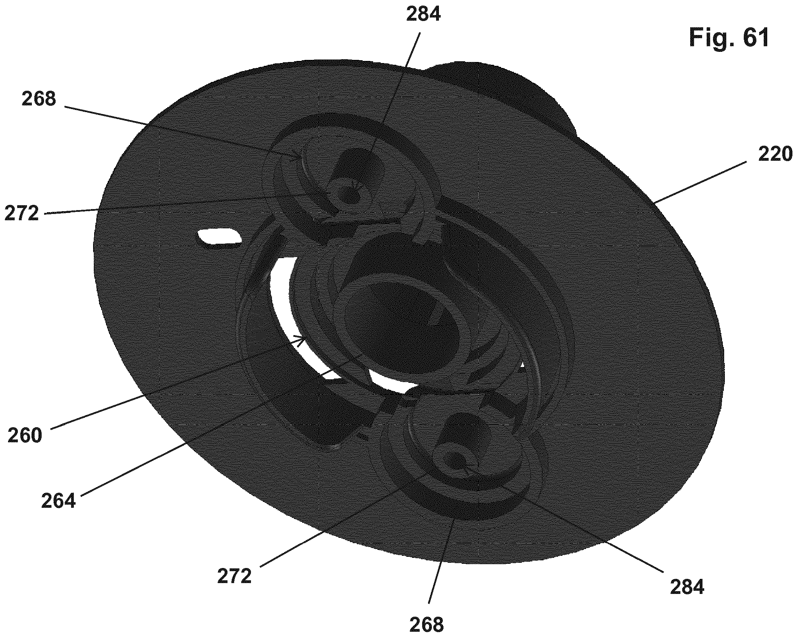

The line guide member 220 is (see Figs. 56 and 61) a unitary member defining guide slots 152A with a number of windings (e.g., three) for the lines L. As shown in Figs. 54-55, the guide member 220 cooperates with the gear support 228 to rotatably support the gears 232, 236 of the gear brake assembly 224.

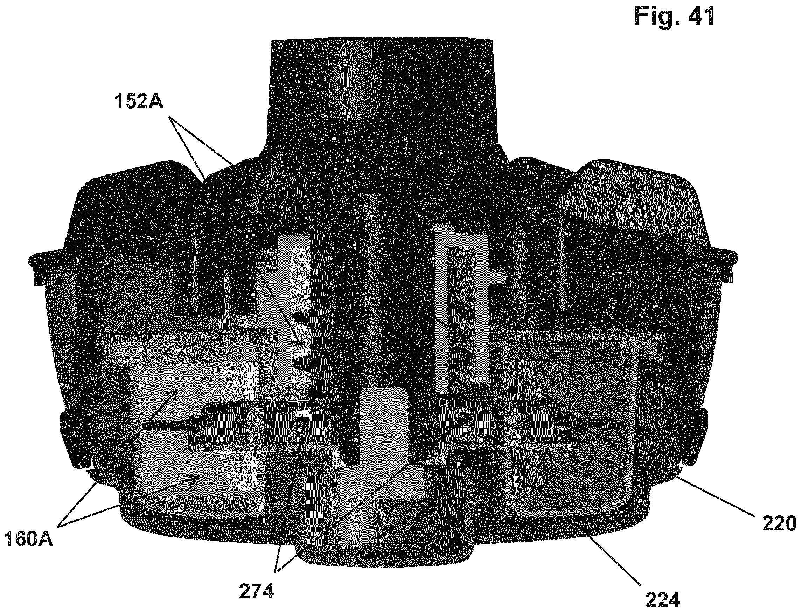

The guide member 220 defines (see Figs. 56 and 61) a central pocket 260 receiving the main gear 232 and a central post 264 on which the main gear 232 is rotatably guided. A side pocket 268 receives each gear 236 and has a post 272 for rotatably guiding the gear 236. As shown in Figs. 41, 47 and 54, a line passage 276 passes between adjacent gears 232, 236 from the associated compartment 160A to the associated guide slot 152A.

The gear support 228 cooperates (see Figs. 54-55) with the pockets 260, 268 to house the gear brake assembly 224. Projections 280 are received in openings 284 in the posts 272 to connect the gear support 228 and the guide member 220. A central opening 288 provides access to the stop member(s) 252b on the main gear 232.

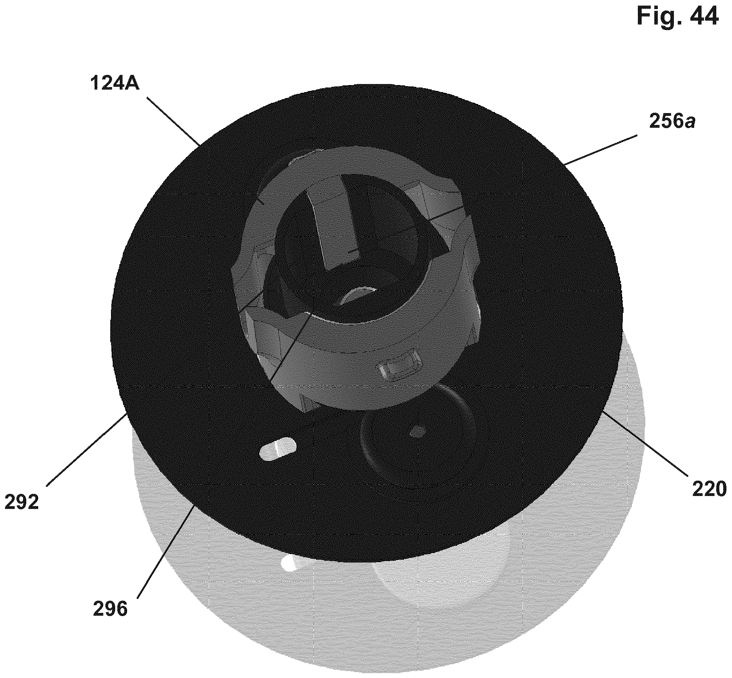

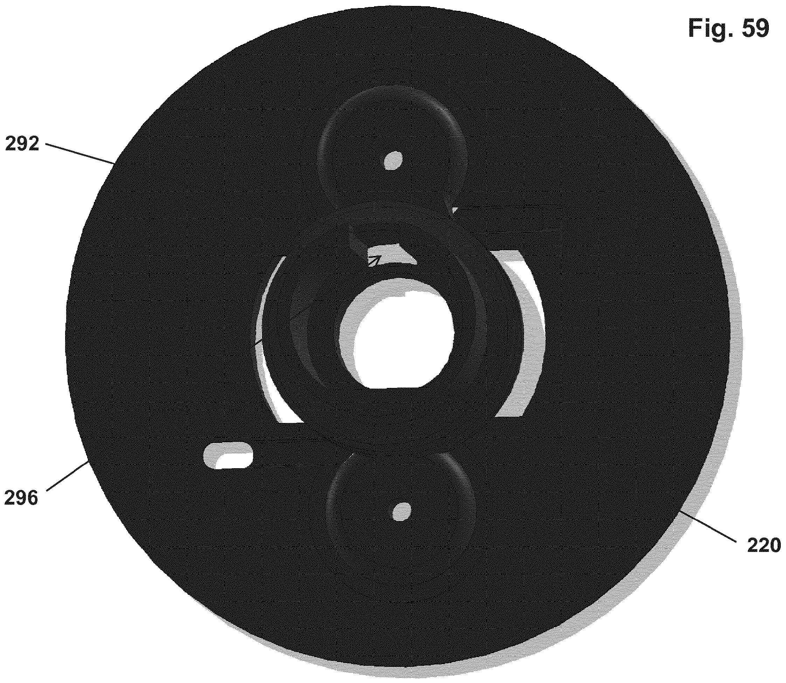

The guide member 220 defines (see Fig. 59) a groove 292 communicating with an opening 296 providing access to the stop member(s) 252a on the main gear 232. As shown in Fig. 44, the stop member 256a on the slide tube 124A extends in the groove 292 and through the opening 296 to be positioned to be selectively engaged by the stop member(s) 252a.

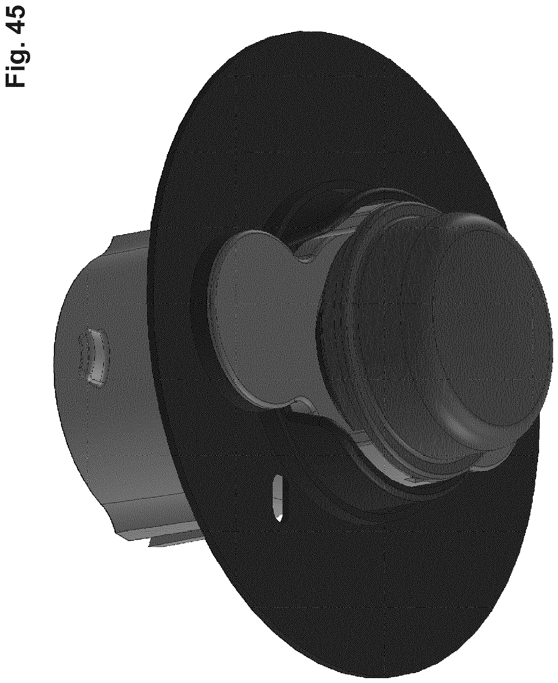

As shown in Figs. 45-49, 66-68 and 71-74, the bump member 196A is connected to the bottom end of the slide tube 124A for movement with the slide tube 124A relative to the guide member 220. The guide member 220 and the assembly of the bump member 196A and the slide tube 124A cooperate to capture each other.

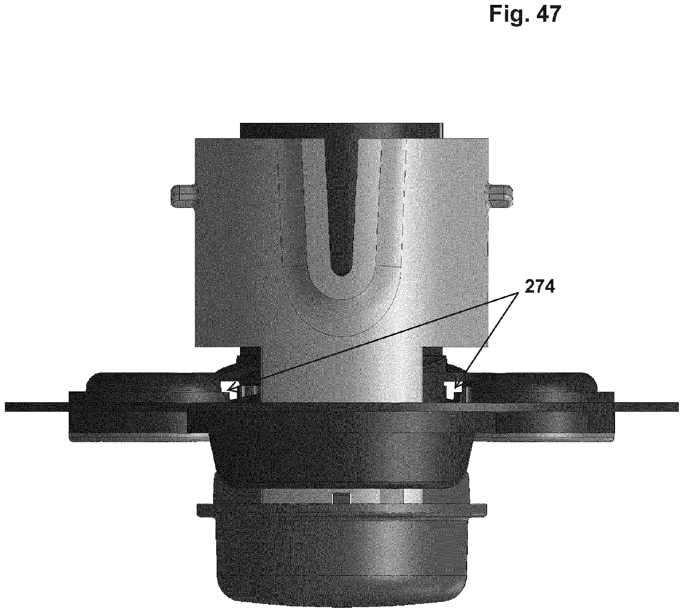

As shown in Fig. 47, portions of the slide tube 124A extend through the slots 170A in the divider plate 156A for connection to the bump member 196A. Barbed projections 300 on the bump member 196A (see Figs. 66-68 and 71-74) are received in openings 304 to connect the bump member 196A and the slide tube 124A. The stop member 256b extends in a slot 308 in the slide tube 124A.

In operation, the line cartridge 10A is positioned in the trimmer head 14 with the housing members 18, 22 connected (see Fig. 40). The spring (not shown but similar to the spring 62 in Fig. 3) biases the slide tube 124A and the bump member 196A downwardly relative to the guide member 220, causing the stop assembly 248 to be engaged to prevent dispensing of the line L. Specifically, in the illustrated construction, one first stop member 252a on the main gear 232 is engaged with the stop member 256a on the slide tube 124A.

To dispense line L, the line cartridge 10A is operable in an auto-feed mode (with the auto-feed trimmer head 14) or in a bump-feed mode. In each mode, the slide tube 124A and the bump member 196A are moved upwardly, causing the stop member 252a to be disengaged from the stop member 256a. With the stop assembly 248 disengaged, centrifugal force causes the lines L to be dispensed, thereby causing the gears 232, 236 to rotate.

In the illustrated construction, the amount of line L dispensed during each dispensing action is limited. Specifically, after the stop member 252a disengages the stop member 256a, the main gear 232 rotates an amount (e.g., about 60°) as line L is dispensed until one second stop member 252b engages with the stop member 256b of the bump member 196A, now in a raised position as a result of sliding of the bump member 196A with the slide tube 124A.

The stops 252b, 256b remain engaged until the slide tube 124A returns to its initial axial position (e.g., in an auto-feed mode, by slowing the trimmer head 14 (due to the increased amount of dispensed line L or reducing power to the motor) to disengage the ramps 86A from the lift projections 128A; in a bump-feed mode, by disengaging the bump member 196A from the ground). As the slide tube 124A moves downwardly relative to the gear brake assembly 224, the bump member 196A also moves downwardly, disengaging the stop members 252b, 256b. Because the stop members 256a, 256b are circumferentially offset, with the stop members 252b, 256b disengaged, the main gear 232 is able to rotate (again, about 60°), and line L is dispensed until one stop member 252a engages the stop member 256a on the slide tube 124A.

The dispensing action thus ends. To dispense additional line L, the operation is repeated until the desired amount of line L has been dispensed.

The number and position of the stop member(s) 252 on the main gear 232 are selected based on the desired amount of rotation (e.g., 90°, 120°, 180°, 360°, etc.) during dispensing of the lines L which correlates to the amount of line L being dispensed. As described above, in the illustrated construction, during each dispensing action, the length of line L dispensed is limited by limited rotation of the main gear 232 (e.g., about 120°, as illustrated).

In some constructions (not shown), dispensing of line L may not be limited by the stop assembly 248. For example, with only a single stop member 252 on the main gear 232 and the stop member 256 on the slide tube 124A, when the slide tube 124A is moved to disengage the stops 252, 256, the main gear 232 is free to rotate and line L can be dispensed until the slide tube 124A returns to the position with the stop members 252, 256 engaged.

The invention may thus provide a line cartridge assembled as a unit and useable with a trimmer head. The line cartridge may be useable in an auto-fee mode and in a bump-feed mode.

One or more independent features and/or independent advantages of the invention may be set forth in the claims.

## Claims

1. A cartridge (10, 10A) for a trimmer head (14), the trimmer head including a housing assembly with a top member (18) drivingly engaging a drive shaft of a trimmer (T), the cartridge comprising:
a cartridge housing operable to support a line (L);
**characterized in that** the cartridge comprises a brake assembly operable in a braking condition to selectively apply a force to the line to prevent line from being dispensed,
wherein the brake assembly is operable between the braking condition and a release condition in an auto-feed mode, in cooperation with a flyweight (74), and in a bump-feed mode, when a bump member (196,196A) engages a surface.

2. The cartridge (10, 10A) of claim 1, **characterized in that** the cartridge housing, the line (L) and the brake assembly are assembled as a unit.

3. The cartridge (10, 10A) of claim 1 , **characterized in that** the brake assembly includes a brake member (176) pivotable relative to the cartridge housing between a braking position, in which the brake member applies a pinching force to the line (L) to prevent line from being dispensed, and a release position.

4. The cartridge (10, 10A) of claim 3, **characterized in that** the cartridge is supportable for rotation about an axis (A), and wherein the brake member (176) is pivotable about a pivot axis (PA) extending transverse to the axis.

5. The cartridge (10, 10A) of claim 3 or 4, **characterized in that** brake member (176) is pivotable about a pivot axis (PA), and wherein the cartridge housing includes a housing portion defining the pivot axis, in the braking position, the brake member cooperating with the housing portion to apply a pinching force to the line (L).

6. The cartridge (10, 10A) of claim 3, 4 or 5, **characterized in that** brake member (176) is pivotable about a pivot axis (PA), and wherein the cartridge housing includes
a first housing portion (1 24, 124A) defining the pivot axis (PA), and
a second housing portion (196, 196A) movable relative to the pivot axis, movement of the second housing portion causing pivoting movement of the brake member.

7. The cartridge (1 OA) of claim 1 , **characterized in that** the brake assembly includes
a first gear (236) having a first gripping portion (244) engaging the line (L) and a first gear portion (240), and
a second gear (232) having a second gripping portion (244) engaging the line (L), a second gear portion intermeshed with the first gear portion, and a stop member (252, 252a,252b),
the brake assembly being selectively operable between the braking condition, in which the stop member engages the second housing portion to inhibit rotation of the first gear and the second gear to prevent line from being dispensed, and a release condition, in which the stop member is disengaged and the first gear and the second gear are rotatable to allow line to be dispensed.

8. The cartridge (1 OA) of claim 7, **characterized in that** the cartridge housing includes
a first housing portion (124A, 196A) supporting the first gear (236) and the second gear (232), and
a second housing portion (196A, 124A) movable relative to the first housing portion between a stop position corresponding to the braking condition, in which the stop member (252, 252a, 252b) engages the second housing portion to inhibit rotation of the second gear and the first gear, and a release position, in which the stop member is disengaged to allow rotation of the first gear and the second gear.

9. The cartridge (10, 10A) of claim 1 , **characterized in that** the brake assembly includes a brake member (176) operable between the braking condition, in which the brake member prevents line (L) from being dispensed, and a release condition, wherein the cartridge is supportable for rotation about an axis, and wherein the cartridge housing includes
a first housing portion (148) supporting the brake member and being fixed in an axial position, and
a second housing movable along the axis, movement of the second housing portion operating the brake member between the braking condition and the release condition.

10. The cartridge (10) of claim 9, **characterized in that** the housing assembly pivotably supports the flyweight (74), the flyweight having a ramped surface (86), wherein the second housing portion has a lifting projection (1 28), in the auto-feed mode, the flyweight being pivotable to engage the ramped surface with the lifting projection to move the second housing portion, and wherein the cartridge housing includes the bump member, the bump member being connected to the second housing portion for movement with the second housing portion.

11. The cartridge (10) of claim 9, **characterized in that** the first housing portion (148) defines a guide slot (152) for the line (L), the guide slot extending about the axis, and wherein the second housing portion has a circumferential surface cooperating with the first housing portion to maintain the line in the guide slot.

12. The cartridge (10) of claim 11, **characterized in that** the cartridge housing also includes a top member (104) and a bottom member (108) cooperating to define a cavity (1 10), and wherein the first housing portion (148) includes a radially-extending divider plate (156) dividing the cavity into a first line compartment (160) for a first line and a second line compartment (160) for a second line.

13. The cartridge (10) of claim 1, **characterized in that** the brake assembly includes
a first brake member operable in the braking condition to prevent a first line from being dispensed, and
a second brake member operable in the braking condition to prevent a second line from being dispensed.

14. A trimmer (T) comprising:
a motor operable to drive a drive shaft; and
a trimmer head (14) including a housing assembly with a top member (18) drivingly engaging the drive shaft for rotation about an axis (A); **characterized in that** the trimmer comprises
a cartridge (10, 10A) according to one of the claims 1 to 13.

## Patentansprüche

1. Kartusche (10, 10A) für einen Trimmerkopf (14), wobei der Trimmerkopf eine Gehäusebaugruppe mit einem oberen Element (18) einschließt, das antriebsmäßig mit einer Antriebswelle eines Trimmers (T) in Eingriff steht, wobei die Kartusche Folgendes umfasst:
ein Kartuschengehäuse, das betreibbar ist, um eine Schnur (L) zu stützen;
**dadurch gekennzeichnet, dass** die Kartusche eine Bremsbaugruppe umfasst, die in einem Bremszustand betreibbar ist, um selektiv eine Kraft auf die Schnur auszuüben, um zu verhindern, dass Schnur ausgegeben wird,
wobei die Bremsbaugruppe zwischen dem Bremszustand und einem Freigabezustand betreibbar ist in einem automatischen Vorschubmodus, in Zusammenarbeit mit einem Fliehgewicht (74), und in einem Stoßvorschubmodus, wenn ein Stoßelement (196, 196A) mit einer Oberfläche in Eingriff steht.

2. Kartusche (10, 10A) nach Anspruch 1, **dadurch gekennzeichnet, dass** das Kartuschengehäuse, die Schnur (L) und die Bremsbaugruppe als eine Einheit zusammengebaut sind.

3. Kartusche (10, 10A) nach Anspruch 1, **dadurch gekennzeichnet, dass** die Bremsbaugruppe ein Bremselement (176) einschließt, das relativ zu dem Kartuschengehäuse zwischen einer Bremsposition, in der das Bremselement eine Klemmkraft auf die Schnur (L) ausübt, um zu verhindern, dass Schnur ausgegeben wird, und einer Freigabeposition schwenkbar ist.

4. Kartusche (10, 10A) nach Anspruch 3, **dadurch gekennzeichnet, dass** die Kartusche zur Drehung um eine Achse (A) gestützt werden kann, und wobei das Bremselement (176) um eine Schwenkachse (PA) schwenkbar ist, die sich quer zur Achse erstreckt.

5. Kartusche (10, 10A) nach Anspruch 3 oder 4, **dadurch gekennzeichnet, dass** Bremselement (176) um eine Schwenkachse (PA) schwenkbar ist, und wobei das Kartuschengehäuse einen Gehäuseabschnitt einschließt, der die Schwenkachse in der Bremsposition definiert, wobei das Bremselement mit dem Gehäuseabschnitt zusammenwirkt, um eine Klemmkraft auf die Schnur (L) auszuüben.

6. Kartusche (10, 10A) nach Anspruch 3, 4 oder 5, **dadurch gekennzeichnet, dass** das Bremselement (176) um eine Schwenkachse (PA) schwenkbar ist, und wobei das Kartuschengehäuse Folgendes einschließt:
einen ersten Gehäuseabschnitt (124, 124A), der die Schwenkachse (PA) definiert, und
einen zweiten Gehäuseabschnitt (196, 196A), der relativ zu der Schwenkachse beweglich ist, wobei die Bewegung des zweiten Gehäuseabschnitts eine Schwenkbewegung des Bremselements bewirkt.

7. Kartusche (1 OA) nach Anspruch 1, **dadurch gekennzeichnet, dass** die Bremsbaugruppe Folgendes einschließt:
ein erstes Zahnrad (236), das einen ersten Greifabschnitt (244), der mit der Schnur (L) in Eingriff steht, und einen ersten Getriebeabschnitt (240) aufweist, und
ein zweites Zahnrad (232), das einen zweiten Greifabschnitt (244), der mit der Schnur (L) in Eingriff steht, einen zweiten Getriebeabschnitt, der mit dem ersten Getriebeabschnitt verzahnt ist, und ein Anschlagelement (252, 252a, 252b) aufweist,
wobei die Bremsbaugruppe selektiv zwischen dem Bremszustand, in dem das Anschlagelement mit dem zweiten Gehäuseabschnitt in Eingriff steht, um die Drehung des ersten Zahnrads und des zweiten Zahnrads zu verhindern, um zu verhindern, dass Schnur ausgegeben wird, und einem Freigabezustand schwenkbar ist, in dem das Anschlagelement außer Eingriff gebracht ist und das erste Zahnrad und das zweite Zahnrad drehbar sind, um ein Ausgeben der Schnur zu ermöglichen.

8. Kartusche (1 OA) nach Anspruch 7, **dadurch gekennzeichnet, dass** das Kartuschengehäuse Folgendes einschließt:
einen ersten Gehäuseabschnitt (124A, 196A), der das erste Zahnrad (236) und das zweite Zahnrad (232) trägt, und
einen zweiten Gehäuseabschnitt (196A, 124A), der relativ zu dem ersten Gehäuseabschnitt zwischen einer Anschlagposition, die dem Bremszustand entspricht, in dem das Anschlagelement (252, 252a, 252b) mit dem zweiten Gehäuseabschnitt in Eingriff steht, um die Drehung des zweiten Zahnrads und des ersten Zahnrads zu verhindern, und einer Freigabeposition beweglich ist, in der das Anschlagelement außer Eingriff steht, um eine Drehung des ersten Zahnrads und des zweiten Zahnrads zu ermöglichen.

9. Kartusche (10, 10A) nach Anspruch 1, **dadurch gekennzeichnet, dass** die Bremsbaugruppe ein Bremselement (176) einschließt, das zwischen dem Bremszustand, in dem das Bremselement verhindert, dass Schnur (L) ausgegeben wird, und einem Freigabezustand betreibbar ist, wobei die Kartusche zur Drehung um eine Achse gestützt werden kann, und wobei das Kartuschengehäuse Folgendes einschließt:
einen ersten Gehäuseabschnitt (148), der das Bremselement trägt und in einer axialen Position fixiert ist, und
ein zweites Gehäuse, das entlang der Achse beweglich ist, wobei eine Bewegung des zweiten Gehäuseabschnitts das Bremselement zwischen dem Bremszustand und dem Freigabezustand betätigt.

10. Kartusche (10) nach Anspruch 9, **dadurch gekennzeichnet, dass** die Gehäusebaugruppe das Fliehgewicht (74) schwenkbar stützt, wobei das Fliehgewicht eine Rampenfläche (86) aufweist, wobei der zweite Gehäuseabschnitt einen Hebevorsprung (128) in dem automatischen Zuführmodus aufweist, wobei das Fliehgewicht schwenkbar ist, um die Rampenfläche mit dem Hebevorsprung in Eingriff zu bringen, um den zweiten Gehäuseabschnitt zu bewegen, und wobei das Kartuschengehäuse das Stoßelement einschließt, wobei das Stoßelement zum Bewegen mit dem zweiten Gehäuseabschnitt mit dem zweiten Gehäuseabschnitt verbunden ist.

11. Kartusche (10) nach Anspruch 9, **dadurch gekennzeichnet, dass** der erste Gehäuseabschnitt (148) einen Führungsschlitz (152) für die Schnur (L) definiert, wobei sich der Führungsschlitz um die Achse erstreckt, und wobei der zweite Gehäuseabschnitt eine Umfangsfläche aufweist, die mit dem ersten Gehäuseabschnitt zusammenwirkt, um die Schnur in dem Führungsschlitz zu halten.

12. Kartusche (10) nach Anspruch 11, **dadurch gekennzeichnet, dass** das Kartuschengehäuse auch ein oberes Element (104) und ein unteres Element (108) einschließt, die zusammenwirken, um einen Hohlraum (110) zu definieren, und wobei der erste Gehäuseabschnitt (148) eine sich radial erstreckende Trennplatte (156) einschließt, die den Hohlraum in eine erste Schnurkammer (160) für eine erste Schnur und eine zweite Schnurkammer (160) für eine zweite Schnur unterteilt.

13. Kartusche (10) nach Anspruch 1, **dadurch gekennzeichnet, dass** die Bremsbaugruppe Folgendes einschließt:
ein erstes Bremselement, das im Bremszustand betreibbar ist, um zu verhindern, dass eine erste Schnur ausgegeben wird, und
ein zweites Bremselement, das im Bremszustand betreibbar ist, um zu verhindern, dass eine zweite Schnur ausgegeben wird.

14. Trimmer (T), umfassend:
einen Motor, der betreibbar ist, um eine Antriebswelle anzutreiben; und
einen Trimmerkopf (14), der eine Gehäusebaugruppe mit einem oberen Element (18) einschließt, das antriebsmäßig mit der Antriebswelle in Eingriff steht für eine Drehung um eine Achse (A); **dadurch gekennzeichnet, dass** der Trimmer Folgendes umfasst:
eine Kartusche (10, 10A) nach einem der Ansprüche 1 bis 13.

## Revendications

1. Cartouche (10, 10A) pour une tête de coupe (14), la tête de coupe incluant un ensemble boîtier avec un élément supérieur (18) venant en prise par entraînement avec un arbre d'entraînement d'un taille-bordure (T), la cartouche comprenant :
un boîtier de cartouche utilisable pour supporter une ligne (L) ;
**caractérisée en ce que** la cartouche comprend un ensemble frein utilisable dans un état de freinage pour appliquer sélectivement une force à la ligne pour empêcher la distribution de la ligne,
dans laquelle l'ensemble frein est utilisable entre l'état de freinage et un état de libération dans un mode d'avance automatique, en coopération avec une masselotte (74), et dans un mode d'avance par choc, lorsqu'un élément de bosse (196, 196A) vient en prise avec une surface.

2. Cartouche (10, 10A) selon la revendication 1, **caractérisée en ce que** le boîtier de cartouche, la ligne (L) et l'ensemble frein sont assemblés en une seule pièce.

3. Cartouche (10, 10A) selon la revendication 1, **caractérisée en ce que** l'ensemble frein inclut un élément de frein (176) pouvant pivoter par rapport au boîtier de cartouche entre une position de freinage, dans laquelle l'élément de frein applique une force de pincement à la ligne (L) pour empêcher la distribution de la ligne, et une position de libération.

4. Cartouche (10, 10A) selon la revendication 3, **caractérisée en ce que** la cartouche peut être supportée pour tourner autour d'un axe (A), et dans laquelle l'élément de frein (176) peut pivoter autour d'un axe de pivotement (PA) s'étendant transversalement à l'axe.

5. Cartouche (10, 10A) selon la revendication 3 ou 4, **caractérisée en ce que** l'élément de frein (176) peut pivoter autour d'un axe de pivotement (PA), et dans laquelle le boîtier de cartouche inclut une partie de boîtier définissant l'axe de pivotement, dans la position de freinage, l'élément de frein coopérant avec la partie de boîtier pour appliquer une force de pincement à la ligne (L).

6. Cartouche (10, 10A) selon la revendication 3, 4 ou 5, **caractérisée en ce que** l'élément de frein (176) peut pivoter autour d'un axe de pivotement (PA), et dans laquelle le boîtier de cartouche inclut
une première partie de boîtier (124, 124A) définissant l'axe de pivotement (PA), et
une seconde partie de boîtier (196, 196A) mobile par rapport à l'axe de pivotement, le mouvement de la seconde partie de boîtier provoquant un mouvement de pivotement de l'élément de frein.

7. Cartouche (1 OA) selon la revendication 1, **caractérisée en ce que** l'ensemble frein inclut
un premier engrenage (236) ayant une première partie de prise (244) venant en prise avec la ligne (L) et une première partie d'engrenage (240), et
un second engrenage (232) ayant une seconde partie de prise (244) venant en prise avec la ligne (L), une seconde partie d'engrenage imbriquée avec la première partie d'engrenage, et un élément d'arrêt (252, 252a, 252b),
l'ensemble frein étant utilisable sélectivement entre l'état de freinage, dans lequel l'élément d'arrêt vient en prise avec la seconde partie de boîtier pour empêcher la rotation du premier engrenage et du second engrenage afin d'empêcher la distribution de la ligne, et un état de libération, dans lequel l'élément d'arrêt est dégagé et le premier engrenage et le second engrenage peuvent tourner pour permettre la distribution de la ligne.

8. Cartouche (1 OA) selon la revendication 7, **caractérisée en ce que** le boîtier de cartouche inclut
une première partie de boîtier (124A, 196A) supportant le premier engrenage (236) et le second engrenage (232), et
une seconde partie de boîtier (196A, 124A) mobile par rapport à la première partie de boîtier entre une position d'arrêt correspondant à l'état de freinage, dans laquelle l'élément d'arrêt (252, 252a, 252b) vient en prise avec la seconde partie de boîtier pour empêcher la rotation du second engrenage et du premier engrenage, et une position de libération, dans laquelle l'élément d'arrêt est dégagé pour permettre la rotation du premier engrenage et du second engrenage.

9. Cartouche (10, 10A) selon la revendication 1, **caractérisée en ce que** l'ensemble frein inclut un élément de frein (176) utilisable entre l'état de freinage, dans lequel l'élément de frein empêche la distribution de la ligne (L), et un état de libération, dans lequel la cartouche peut être supportée pour tourner autour d'un axe, et dans laquelle le boîtier de cartouche inclut
une première partie de boîtier (148) supportant l'élément de frein et étant fixée dans une position axiale, et
un second boîtier mobile le long de l'axe, le mouvement de la seconde partie de boîtier actionnant l'élément de frein entre l'état de freinage et l'état de libération.

10. Cartouche (10) selon la revendication 9, **caractérisée en ce que** l'ensemble boîtier supporte de manière pivotante la masselotte (74), la masselotte ayant une surface inclinée (86), dans laquelle la seconde partie de boîtier a une saillie de levage (128), dans le mode d'avance automatique, la masselotte pouvant pivoter pour venir en prise avec la surface inclinée avec la saillie de levage pour déplacer la seconde partie de boîtier, et dans laquelle le boîtier de cartouche inclut l'élément de bosse, l'élément de bosse étant relié à la seconde partie de boîtier pour se déplacer avec la seconde partie de boîtier.

11. Cartouche (10) selon la revendication 9, **caractérisée en ce que** la première partie de boîtier (148) définit une fente de guidage (152) pour la ligne (L), la fente de guidage s'étendant autour de l'axe, et dans laquelle la seconde partie de boîtier a une surface circonférentielle coopérant avec la première partie de boîtier pour maintenir la ligne dans la fente de guidage.

12. Cartouche (10) selon la revendication 11, **caractérisée en ce que** le boîtier de cartouche inclut également un élément supérieur (104) et un élément inférieur (108) coopérant pour définir une cavité (110) et dans laquelle la première partie de boîtier (148) inclut une plaque séparatrice s'étendant radialement (156) divisant la cavité en un premier compartiment de ligne (160) pour une première ligne et un second compartiment de ligne (160) pour une seconde ligne.

13. Cartouche (10) selon la revendication 1, **caractérisée en ce que** l'ensemble frein inclut
un premier élément de frein utilisable dans l'état de freinage pour empêcher la distribution d'une première ligne, et
un second élément de frein utilisable dans l'état de freinage pour empêcher la distribution d'une seconde ligne.

14. Taille-bordures (T) comprenant :
un moteur pouvant être utilisé pour entraîner un arbre d'entraînement ; et
une tête de coupe (14) incluant un ensemble boîtier avec un élément supérieur (18) venant en prise par entraînement avec l'arbre d'entraînement pour tourner autour d'un axe (A) ; **caractérisé en ce que** le taille-bordures comprend
une cartouche (10, 10A) selon l'une des revendications 1 à 13.
